# EUROPÄISCHE PATENTSCHRIFT

(11) **EP 2 696 251 B1**
(45) Veröffentlichungstag und Bekanntmachung des Hinweises auf die Patenterteilung: **04.12.2019**
(21) Anmeldenummer: 13175459.0
(22) Anmeldetag: 08.07.2013
(51) Int. Cl.: G05B 23/02

(54) **Verfahren zum Überwachen von rotierenden Maschinen**
Method for monitoring rotating machines
Procédé de surveillance de machines rotatives

(30) Priorität: 07.08.2012 DE 102012015485
(43) Veröffentlichungstag der Anmeldung: 12.02.2014
(73) Patentinhaber: Prüftechnik Dieter Busch GmbH, 85737 Ismaning (DE)
(72) Erfinder: Lösl, Johann, 84172 Buch am Erlbach (DE); Becker, Edwin, 85452 Moosinning (DE); Göhlich, Horst, 81475 München (DE)

(56) Entgegenhaltungen:
- WO-A2-2010/011918
- WO-A2-2011/143531
- EDZEL LAPIRA ET AL: "Wind turbine performance assessment using multi-regime modeling approach", RENEWABLE ENERGY, PERGAMON PRESS, OXFORD, GB, vol. 45, 7 February 2012 (2012-02-07), pages 86-95, XP028406906, ISSN: 0960-1481, DOI: 10.1016/J.RENENE.2012.02.018 [retrieved on 2012-03-02]

## Beschreibung

Die vorliegende Erfindung betrifft ein Verfahren zum Überwachen von rotierenden Maschinen, insbesondere Windenergieanlagen, die mit einer Mehrzahl von Sensoren zum Erfassen von physikalischen Parametern versehen sind.

Für die Überwachung der mechanischen Komponenten von rotierenden Maschinen, wie beispielsweise Windkraftanlagen hat sich die schwingungsdiagnostische Zustandsüberwachung etabliert. Hierbei werden die Schwingungen der einzelnen Komponenten als zustandsbeschreibende Größe dauerhaft aufgezeichnet. Über Onlinesysteme lassen sich die permanent gemessenen Daten an ein Servicecenter versenden. Dies bietet die Möglichkeit, eine Vielzahl von Anlagen, unabhängig von deren Aufstellungsort überwachen zu können. Lassen sich aus den gemessenen Schwingungsgrößen Rückschlüsse auf sich anbahnende Bauteilschäden ziehen, wird der Betreiber der Anlage informiert. Dieser kann nun, je nach Art und Ausprägung des Schadens, zeitnah reagieren.

In Fall einer Windenergieanlage gestaltet sich beispielsweise wegen der hohen Komplexität der Windenergieanlage als Gesamtkonstruktion die Analyse der Schwingungsgrößen zum Teil jedoch schwierig. Die Vielzahl der Einflüsse, sowie deren gegenseitige Überlagerung, macht eine eindeutige Interpretation der Schwingungsursache mit den herkömmlichen Werkzeugen teils unmöglich. Hinzu kommt das Problem, dass die steigende Anzahl an zu überwachenden Anlagen sowie die Weiterent-wicklung der Messsysteme hin zu lückenloser Aufzeichnung der Zustände immer größere Datenmengen verursachen.

Typischerweise wird bei der Zustandsüberwachung von Maschinen zwischen Level 1, Level 2 und Level 3 unterschieden, wobei Level 1 die Überwachung von Messwerten, z.B. Schwingungsmesswerten, anhand von vorbestimmten Schwellwerten, Level 2 eine Diagnose, typischerweise durch einen Experten in einem Überwachungszentrum, zur Beantwortung der Frage "Welcher Schaden liegt vor?" und Level 3 eine Problem- und Fehlerursachenanalyse beinhaltet.

Ein häufig bei der Zustandsüberwachung von Maschinen verwendetes Verfahren wird als Fehlerzustandsart- und -auswirkungsanalyse (FMEA) bezeichnet, worunter man eine bestimmte Art von systematischem Vorgehen bei der Analyse eines Systems versteht, um mögliche Fehlzustandsarten, ihre Ursachen und ihre Auswirkungen auf das Systemverhalten zu ermitteln. Ein Beispiel für die Verwendung eines FMEA-Verfahrens bei der Überwachung einer Windenergieanlage (WEA) ist in der DE 10 2008 006 370 A1 beschrieben, wobei für bestimmte Komponenten der Windenergieanlage bestimmte Kennzahlen ermittelt werden, die sich als Produkt bestimmter Indexgrößen, wie Häufigkeit des Auftretens eines bestimmten Fehlers und Schwere der Auswirkung dieses Fehlers, ergeben, wobei diese Kennzahlen unter anderem bei der Bewertung des Diagnoseschemas, des aktuellen Maschinenzustands und des Ausfallrisikos verwendet werden können.

Ferner können bei der Zustandsüberwachung von Maschinen statistische Verfahren eingesetzt werden, um die oft sehr umfangreichen Messdatensätze durch Bilden von Datenclustern von redundanten Informationen zu bereinigen. Ein Beispiel dafür ist die Datenverarbeitung mit Hilfe von Self-Organizing-Maps (SOM), was erstmals von T. Kohonen im Jahr 1982 vorgeschlagen wurde.

In der WO 2010/011918 A2 ist die Level 1 Überwachung von Maschinen durch die Bildung von SOM mittels Verfolgung des zeitlichen Verlaufs des so genannten Quantisierungsfehlers der gebildeten SOM beschrieben. Ferner wird auch erwähnt, dass SOMs auch bei der Bestimmung der Fehlerart verwendet werden können. Auch in der US 2010/0114806 A1 ist die Verwendung von SOMs bei der Maschinenüberwachung beschrieben.

In der US 2008/0033898 A1 ist die Überwachung einer Klimaanlage mittels SOMs beschrieben. In der US 2009/0192693 A1 ist die Steuerung eines Verbrennungsmotors unter Verwendung von SOMs beschrieben. In der EP 0 845 720 A1 und der DE 197 34 947 A1 ist die Verwendung von SOMs bei der Steuerung von Kraftwerken beschrieben, wobei in der EP 0 845 720 A1 auch erwähnt ist, dass aus der Bewertung von in den SOMs auftauchenden Mustern die Art von im Kraftwerksbetrieb auftretenden Fehlern bestimmt werden kann.

In der EP 2 472 440 A1 ist die Verwendung von SOMs bei der Zustandsüberwachung von Produktionsanlagen beschrieben, wobei mehrere unterschiedliche SOMs für unterschiedliche Zeitbasen und unterschiedliche Raumgruppen der von den Sensoren gelieferten Daten vorgeschlagen wird; die unterschiedlichen Raumgruppen können beispielsweise unterschiedliche Anlagenteile betreffen.

In dem Artikel "Condition Monitoring: Lernfähiges Online-Diagnosewerkzeug optimiert Industrieanlagen", von C. W. Frey et al., in "Intelligenter Produzieren", Ausgabe 2009/5, Seiten 38 bis 39 ist die Verwendung von SOMs für Industrieanlagen beschrieben, wobei eine Anlagenüberwachung mittels Verfolgung des Quantisierungsfehlers unter Verwendung einer so genannten U-Matrixdarstellung zur Zustandsklassifizierung erwähnt ist.

In dem Artikel "A Process Monitoring System Based on the Kohonen Self-Organizing Maps" von S.-L. Jämsa-Jounela et al., in "Control Engineering Practice" 11 (2003), Seiten 83 bis 92, ist die Verwendung von SOMs in Verbindung mit heuristischen Regeln zur Zustandsüberwachung von Anlagen, beispielsweise einer Kupferschmelzanlage, beschrieben.

In dem Artikel "Gear Box Condition Monitoring Using Self-Organizing Feature Maps" von G. Liao et al., in "Proceedings of the Institution of Mechanical Engineers", Part. C: Journal of Mechanical Engineering Science 2004, 218, Seiten 119 bis 129, ist eine Getriebeüberwachung mittels Visualisierung der U-Matrix von SOMs beschrieben.

In dem Artikel "Modified Self-Organizing Map for Automated Novelty Detection Applied to Vibration Signal Monitoring" von M. L. D. Wong et al., in "Mechanical Systems and Signal Processing" 20, 2006, Seiten 593 bis 610, ist die Überwachung von Lagern mittels SOMs beschrieben.

In der EP 1 640 894 A1 und der EP 1 777 601 A1 sowie in dem Artikel "Real Time Classification Algorithm for Recognition of Machine Operating Modes and by Use of Self Organizing Maps" von G. Vachkov et al., in "Turk J. Elec. Engin." 12, 2004, Seiten 27 bis 42, ist die Verwendung von SOMs bei der Erkennung des momentanen Betriebszustands beschrieben, wobei für jeden bekannten Betriebszustand eine eigene SOMs aufgestellt wird.

In der WO 2011/143531 A1 und dem Artikel "Wind Turbine Performance Assessment Easy-Multi Machine Modelling Approach" E. Lapira et al., in "Renewable Energy" 45, 2012, Seiten 86 bis 95, ist die Verwendung von SOMs zur Zustandsüberwachung bei Windenergieanlagen beschrieben, wobei der Quantisierungsfehler ausgewertet wird, um kritische Betriebszustände zu erkennen.

Es ist Aufgabe der vorliegenden Erfindung, ein Verfahren zum Überwachen einer rotierenden Maschine, z.B. einer Windenergieanlage, insbesondere einer Mehrzahl von solchen Maschinen, zu schaffen, welches effizient und zuverlässig Fehlerzustände erkennt und auch eine effiziente Klassifizierung der Fehler ermöglicht.

Diese Aufgabe wird erfindungsgemäß gelöst durch ein Verfahren gemäß Anspruch 1 bzw. 26.

Bei der erfindungsgemäßen Lösung ist vorteilhaft, dass durch die Verbindung von regelbasiertem Anfangswissen bezüglich bereits verstandenen, in der Regel einfachen, Basisbetriebszuständen mit einer statistischen Datenreduktion mittels SOMs Fehlerzustände der Maschine in besonders effizienter und zuverlässiger Weise erkannt und bewertet werden können. Die Verwendung eines wissensbasierten Verfahrens zur Erstellung eines Startmodells mit dem Regelsatz für die Durchführung der Überwachung stellt eine zweckmäßige und systematische Auswahl der mittels SOMs zu überwachenden Parameter nebst geeigneter Gewichtung und zweckmäßigem Aufbau der SOMs sicher. Die mehrstufige Vorgehensweise bei der SOM-Analyse, bei welcher ausgehend von einer relativ umfassenden und damit "groben" Referenz-SOM eine Verfeinerung der Fehlersuche mittels regelbasiertem Aufstellen von spezifischeren Diagnose-SOMs vorgenommen wird, trägt dabei zu einer effizienten und dennoch spezifischen Fehlersuche bei.

Sofern eine Mehrzahl von mehr oder weniger ähnlichen Maschinen überwacht werden soll, kann durch Katalogisierung der einzelnen Maschinen durch Zuweisung einer Anlagenkennzahl betreffend die Art der Komponenten und/oder des Standorts die Initialisierung des Überwachungsvorgangs besonders einfach und effizient gestaltet werden, indem, falls die Anlagenkennzahl der betreffenden Maschine identisch oder hinreichend ähnlich zu einer anderen, bereits überwachten Maschine ist, das regelbasierte Wissen für das Startmodell oder die Referenz-SOM übernommen werden.

Das wissensbasierte Aufstellen des Startmodells kann beispielsweise unter Verwendung eines FMEA-Verfahrens, unter Verwendung von Markov-Graphen, unter Verwendung von Petri-Netzen und/oder Verwendung einer Ausfallart-Analyse mittels eines Fehlerbaumanalyse (FTA)-Verfahrens erfolgen. Vorzugsweise wird ein FMEA-Verfahren verwendet.

Bevorzugte Ausgestaltungen der Erfindung sind in den Unteransprüchen angegeben.

Im Folgenden werden Ausführungsbeispiele der Erfindung anhand der beigefügten Zeichnungen beispielhaft näher erläutert. Dabei zeigen:
- Fig. 1: eine schematische Ansicht einer Windenergieanlage;
- Fig. 2: ein Diagramm mit einer schematischen Darstellung eines Beispiels eines erfindungsgemäßen Überwachungsverfahrens; und
- Fign. 3 bis 11: verschiedene Beispiele für 3D-Darstellungen von in der Praxis gewonnenen SOMs.

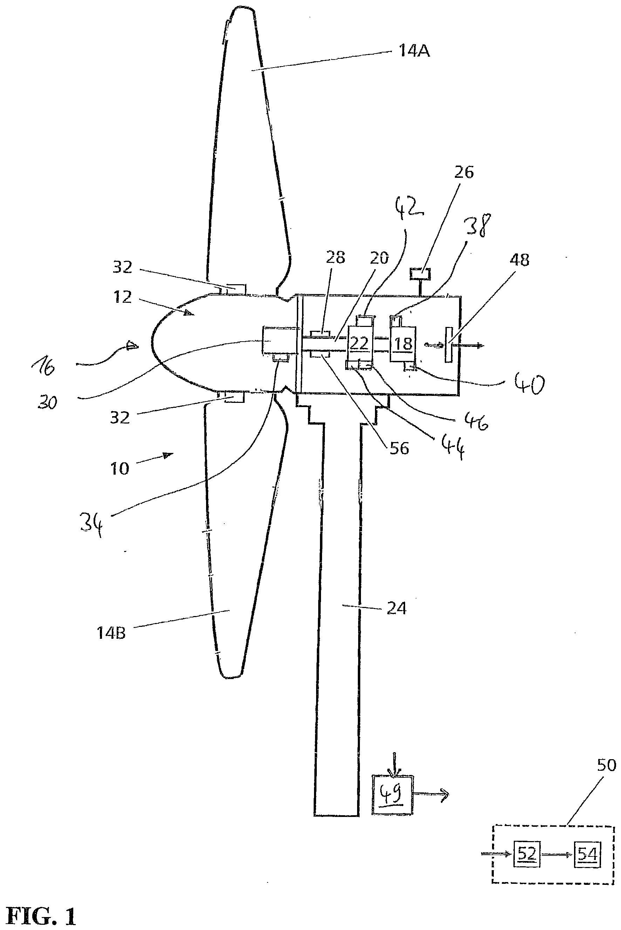

In Fig. 1 ist schematisch eine Windenergieanlage gezeigt, welche einen Rotor 10 mit einer Nabe 12 für drei Rotorblätter (davon sind in Fig. 1 zwei Rotorblätter 14A, 14B gezeigt) aufweist. Der Rotor 10 ist in horizontaler Ausrichtung in einer Gondel 16 gelagert, die einen Generator 18 beherbergt, der von der Rotorwelle 20 für ein Getriebe 22 angetrieben wird. Die Gondel 16 ist um eine vertikale Achse drehbar auf einem Turm 24 gelagert und weist einen Sensor 26 zum Messen der Windgeschwindigkeit und Windrichtung auf. Ferner ist ein Sensor 28 für die Erfassung der Drehzahl des Rotors 10 vorgesehen.

Die Rotorblätter 14A, 14B sind jeweils mittels einer Blattverstellung 32 um ihre Längsachse bezüglich der Nabe 12 verstellbar, um in üblicher Weise eine Pitch-Verstellung der Rotorblätter 14A, 14B zu realisieren.

Ferner ist für die schwingungsdiagnostische Zustandsüberwachung der Windenergieanlage eine Mehrzahl von Schwingungssensoren an den relevanten Anlagenkomponenten vorgesehen, beispielsweise ein horizontal messender Schwingungssensor 34 am Rotorhauptlager 36, ein horizontal messender Schwingungssensor 38 an der A-Seite des Generators 18 (auch als "DE" für Driving End" bezeichnet), und ein weiterer horizontal messender Schwingungssensor 40 an der Generator-B-Seite (auch "NDE" für "Non-Driving-End"). Ferner ist das Getriebe 22 typischerweise mit mehreren Schwingungssensoren versehen, beispielsweise einem horizontal messenden Sensor 42 für die Planetenstufe des Getriebes, einem axial messenden Sensor 44 für die Zwischenstufe des Getriebes 22 sowie einen vertikal messenden Sensor 46 für die Abtriebsstufe des Getriebes 22.

Typischerweise handelt es sich bei den Schwingungssensoren um Beschleunigungsaufnehmer mit linearer Kennlinie in hohen als auch in sehr niedrigen Frequenzbereichen.

Die von den verschiedenen Sensoren erfassten Daten werden in einer Datentransfereinrichtung 48 gesammelt und zu einer Datenverarbeitungseinheit 49 an oder in der Nähe der Windenergieanlage 10 und/oder zu einer entfernt von der Windenergieanlage 10 angeordneten Diagnosestelle 50 übermittelt. Die Datenverarbeitungseinheit 49 kann einer Datentransfereinrichtung 48 auch vorgeschaltet sein, um für eine Vorverarbeitung der von den Sensoren gesammelten Daten zu sorgen, bevor diese an die Diagnosestelle 50 übermittelt werden.

Die Diagnosestelle umfasst typischerweise eine Datenverarbeitungseinheit 52 zum Aufbereiten der empfangenen Daten sowie eine Anzeigeeinrichtung 54 zum Darstellen der aufbereiteten Daten. Der Datentransfer an die Diagnosestelle 50 erfolgt typischerweise per Internet. Insbesondere in Gebieten mit schlechter Internetanbindung ist es vorteilhaft, eine möglichst weitgehende Datenvorverarbeitung vorzunehmen, bevor die Daten an die Diagnosestelle 50 übermittelt werden.

Typischerweise betreibt ein Anlagenbetreiber eine Mehrzahl von Windenergieanlagen, die typgleich oder unterschiedlich sein können, wobei sich auch typgleiche Anlagen durch die im Einzelfall verwendeten Komponenten, wie Art des Generators und Art des Getriebes, unterscheiden können. Ferner unterscheiden sich die Anlagen üblicherweise hinsichtlich ihres Standorts bzw. hinsichtlich ihrer Standortbedingungen: beispielsweise spielen für den Betrieb der Anlage die Beziehung zu den benachbarten Windenergieanlagen, d.h. ob eine bestimmte Windanlage beispielsweise in zweiter Reihe steht, die Topographie der Umgebung (z.B. Platzierung auf einer Anhöhe oder in einem Sattel) sowie Bewuchs und Bebauung der Umgebung eine wichitige Rolle. Um eine einzelne Anlage hinsichtlich ihrer Komponenten und ihres Standorts zu spezifizieren bzw. zu klassifizieren, wird vorzugsweise eine Anlagenkennzahl für jede Windenergieanlage 10 festgelegt, die mindestens eine der Größen Getriebetyp, Umrichtertyp, Rotorblatttyp, Generatortyp und Turmtyp spezifiziert sowie den Standort der Anlage hinsichtlich Beziehung zu den benachbarten Anlagen, Topographie der Umgebung, und Bewuchs und Bebauung der Umgebung kennzeichnet.

Eine Schwierigkeit bei der Analyse von Schwingungen von Windenergieanlagen ist die Überlagerung vieler Einflüsse. Je nach Windgeschwindigkeit, Windanströmwinkel, Blatteinstellwinkel usw., ergeben sich verschiedene Überlagerungen von Schwingungsanregungen und -übertragungen. Das bedeutet, dass verschiedene Fehlerzustände nicht immer eindeutig in den Schwingungsspektren abgebildet werden. Solange charakteristische Fehlerfrequenzen auftauchen, kann man von einem vorhandenen Fehler ausgehen. Ist jedoch keine Fehlerfrequenz im Spektrum identifizierbar, heißt das noch nicht, dass auch kein Fehler vorhanden ist. Des Weiteren ist eine Vielzahl von Anlagen unterschiedlicher Bauart auf dem Markt vertreten, was eine einheitliche Auswertung schwierig macht. Auch Anlagen gleichen Typs können unterschiedliche Komponentenkonfigurationen besitzen. Dies alles beeinflusst die Schwingungscharakteristik der Anlage, so dass allgemeine Aussagen über das Schwingungsverhalten bestimmter Anlagen mit den herkömmlichen Methoden schwierig sind.

Ein weiteres Problem betrifft die Natur der Trendkennwerte von Windenergieanlagen. Der Trendverlauf ist durch die Schwankung der Einflussgrößen ebenfalls Schwankungen unterworfen. So werden häufig die Warn- oder Alarmgrenzen überschritten, ohne dass ein Fehlverhalten der Anlage existiert. Zwar ist zu diesem Zweck die Level 1-Überwachung vorhanden, allerdings kann der Arbeitsaufwand bei erhöhtem Aufkommen von Fehlalarmen stark steigen. Es gilt also Fehlalarme soweit es geht zu vermeiden. Auch die Datenspeicherung kann Schwierigkeiten bereiten. Bei der Überwachung von vielen hundert Anlagen über einen lange Zeitraum, wird der Speicheraufwand immer höher. Dies wird durch die Entwicklung potenterer Messsysteme, welche schneller und umfangreicher messen noch begünstigt. Ebenso kann der Datentransfer Probleme bereiten. Windenergieanlagen finden immer mehr Zugang in die Energieversorgung von Regionen, deren IT-technologische Infrastruktur einen kontinuierlichen Versand großer Datenmengen schwierig macht. Hier ist man auf einen komprimierten Datenversand angewiesen, ohne jedoch die Qualität der Überwachung zu sehr zu beschneiden.

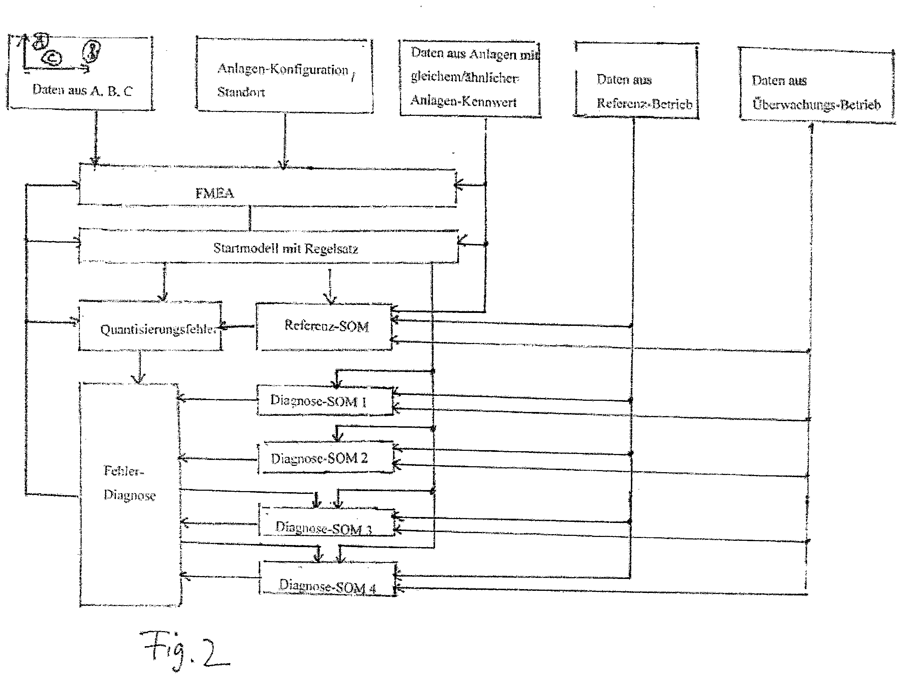

Ein Beispiel für die erfindungsgemäße Vorgehensweise bei der Zustandsüberwachung einer Maschine, z.B. der Windenergieanlage 10, ist in Fig. 2 gezeigt. In einem ersten Schritt werden Start-Sensordaten in mindestens einem Basisbetriebszustand der Maschine gewonnen. Man beschränkt sich hierbei auf einfache, leicht zu verstehende (typischerweise quasi-stationäre) Betriebszustände der Maschine, die gewissermaßen "Normalzustände" darstellen; in Fig. 2 sind solche Basisbetriebszustände in dem Diagramm mit A, B und C bezeichnet.

Auf der Basis der Start-Sensordaten wird dann unter Verwendung eines wissensbasierten Verfahrens, beispielsweise eines FMEA-Verfahrens, ein Startmodell für die Maschine mit einem Regelsatz für die Durchführung der Überwachung aufgestellt, wobei der Regelsatz bestimmt, welche Parameter in welcher Weise und mit welcher Gewichtung überwacht werden sollen und welche Sensordaten dafür gewonnen und verwendet werden sollen. Insbesondere gibt der Regelsatz auch vor, in welcher Weise und mit welchen Daten die bei der Zustandsüberwachung zu verwendenden SOMs aufgestellt werden sollen.

Bei der Aufstellung des Startmodells kann beispielsweise mindestens eine der folgenden Größen verwendet werden (zu weiteren Details siehe auch DE 10 2008 006 370 A1):
eine Diagnoseprioritätszahl, die sich als Produkt der folgenden Indexgröße ergibt: Schwere der Auswirkung des Auftretens eines bestimmten Fehlers hinsichtlich der Funktionsfähigkeit der Maschine, zu erwartende maschinenspezifische Folgekosten bei Eintritt des Fehlers und Möglichkeit der Korrektur des Fehlers;
eine Schwingprioritätszahl, die sich aus dem Produkt der folgenden Indexgrößen ergibt: Häufigkeit, mit der ein vorbestimmter Schwinggrenzwert überschritten wird, Schwere der Auswirkung der Überschreitung des Schwinggrenzwerts hinsichtlich der Funktionsfähigkeit der Maschine, und Entdeckungswahrscheinlichkeit der Überschreitung des Schwinggrenzwerts mittels des vorgesehenen Schwingungserfassungssystems;
eine Risikoprioritätszahl, die sich aus dem Produkt der folgenden Indexgrößen ergibt: Häufigkeit, mit der der vorbestimmte Fehler im Betrieb der Maschine auftritt, Schwere der Auswirkung des Auftretens des Fehlers hinsichtlich der Funktionsfähigkeit der Maschine, und Entdeckungswahrscheinlichkeit des Auftretens des Fehlers mittels des verwendeten Diagnoseschemas und Diagnosesystems.

Dabei kann die Maschine in mehrere Komponenten unterteilt werden, im Falle einer Windenergieanlage z.B. Turm, Rotorhauptlager, Generator, Umrichter, Getriebe, etc., und für jede der Komponenten kann mindestens eine der oben genannten Prioritätszahlen ermittelt werden.

Im Grunde soll bei dem FMEA-basierten Aufstellen des Startmodells die bereits vorliegende Information bezüglich der Maschine hinsichtlich des Auftretens bestimmter Fehler in regelbasierter Weise in die Zustandsüberwachung einfließen, um die nachfolgende statistische Datenauswertung mittels SOMs besonders effizient zu gestalten. Mittels des statistischen Verfahrens sollen auch die Betriebszustände, die zwischen den leicht zugänglichen und verstandenen Basiszuständen A, B, C liegen, der Fehleranalyse zugänglich gemacht werden, um das insgesamte Anlageverständnis zu verbessern.

Falls anhand der Anlagenkennzahl der konkret zu überwachenden Anlage festgestellt wird, dass bereits eine "ähnliche" Maschine im Betrieb ist und überwacht wird, nämlich dann, wenn eine andere Anlage dieselbe Anlagenkennzahl hat oder sich die Anlagenkennzahl der anderen Anlage um nicht mehr als einen vorgegebenen Wert von der vorliegenden Anlagenkennzahl unterscheidet, können die Startsensordaten bzw. das Startmodell mit dem Regelsatz von dieser anderen Anlage übernommen werden, wobei die Identität oder Ähnlichkeit der Anlagenkennzahl sicherstellt, dass die beiden Anlagen auch wirklich hinreichend miteinander vergleichbar sind.

Grundsätzlich erlaubt eine SOM die Darstellung von Daten beliebiger Dimension in zwei- oder dreidimensionalen Karten, wobei der Eingaberaum durch die zu verarbeitenden Daten definiert wird, beispielsweise ein Datensatz mit *m* Variablen und mit *n* Messungen. Die einzelnen Datenvektoren werden mit Hilfe von Vektordistanzberechnungen und Nachbarschaftsbeziehungen einer Koordinate im Ausgabefeld zugewiesen, welches sich als Karte interpretieren lässt, wobei die Ausgabekoordinaten fortlaufend nummeriert sind. Um eine Zuweisung der Daten zu ermöglichen, wird jeder Koordinate zu Beginn ein sogenannter Gewichtsvektor zugewiesen, dessen Dimension der Anzahl m an Variablen des Eingangsdatensatzes entspricht. Für die Zuweisung eines Datenvektors zu einer Koordinate der SOM wird der euklidische Abstand zwischen allen Gewichtsvektoren der SOM und dem Datenvektor berechnet, wobei die Ausgabekoordinate, deren Gewichtsvektor den geringsten Abstand zum Datenvektor aufweist, als "Best-Matching Unit" (BMU) bezeichnet wird.

Beim Trainieren der SOM wird der Gewichtsvektor der BMU an den jeweiligen Datenvektor angepasst, wobei auch die Gewichtsvektoren der umliegenden Koordinaten der BMU zu einem gewissen Grad an den Datenvektor angeglichen werden, was durch die Nachbarschaftsfunktion bestimmt wird.

Wurde nun eine SOM mit einem Datensatz trainiert, der über eine bestimmte Zeitdauer des normalen Anlagenbetriebs gewonnen wurde, kann man die dabei erzeugte SOM als "Referenz-SOM" betrachten da sie einen irgendwie gearteten Normalzustand oder Referenzzustand der Anlage repräsentiert.

Der Grad der Abweichung des aktuellen Datenvektors, d.h. des aktuellen Anlagenzustands, von dem Referenzzustand kann durch den so genannten Quantisierungsfehler abgeschätzt werden, welcher den euklidischen Abstand zwischen dem aktuellen Datenvektor und dem Gewichtsvektor der BMU darstellt.

Eine Visualisierung und Analyse unterschiedlicher Zustände bzw. "Phasen" innerhalb des Datensatzes, mit welchem die SOM trainiert wurde, kann mittels der Darstellung der so genannten U-Matrix ("Unified-Distance-Matrix") erfolgen, wo für jede Koordinate die euklidischen Abstände seines Gewichtsvektors zu denen seiner direkten Nachbarkoordinaten berechnet und dargestellt werden.

Die Information über die Häufigkeit des Auftretens gegenüber Zuständen der U-Matrix lässt sich mittels der so genannten Hits-Matrix abbilden, wobei für jede Koordinate dargestellt wird, wie viele Datenvektoren aus dem Datensatz sie repräsentiert.

Bei der vorliegenden Erfindung werden anhand des Regelsatzes des Startmodells Sensordaten ausgewählt, die in einer Referenzbetriebsphase der Maschine gewonnen werden und dann für die Erstellung einer Referenz-SOM anhand des Regelsatzes verwendet. So kann auf diese Weise beispielsweise sichergestellt werden, dass nur solche Sensordaten überhaupt ausgewertet werden, die für die zu überwachende Maschine relevant bzw. kritisch sind. So könnte es sich im Falle einer Windenergieanlage beispielsweise aus den Start-Sensordaten und den FMEA-Verfahren ergeben, dass die Daten des Sensors 44 der Zwischenstufe des Getriebes 22 nicht relevant sind, da diese Zwischenstufe innerhalb der typischen Anlagenlebensdauer nie eine Schädigung erfährt.

Im Falle einer Windenergieanlage werden bei der Referenz-SOM typischerweise die Windgeschwindigkeit und gegebenenfalls Windrichtung, Drehzahl und Leistung der Windenergieanlage sowie verschiedene an unterschiedlichen Stellen gemessene Schwingkennwerte verwendet.

Vorzugsweise werden bei der vorliegenden Erfindung die SOMs manuell bzw. deterministisch so initialisiert (d.h. die anfänglichen Gewichtsvektoren werden so gewählt), dass sich gleiche Betriebszustände der Maschine bei allen SOMs in gleichen (Koordinaten-) Gebieten der SOMs anordnen (z.B. dergestalt, dass Zustände hoher Drehzahl/Leistung (Volllast) immer rechts oben und Zustände am Stillstand immer rechts unten liegen). Dies erleichtert die Auswertung der SOMs erheblich.

Als Nachbarschaftsfunktion der SOMs wird vorzugsweise eine Gauß-Funktion gewählt.

Gegebenenfalls kann es erforderlich oder zweckmäßig sein, die verwendeten Sensormessdaten zwecks Vergleichbarkeit mit anderen Messdaten zu interpolieren, um z.B. ein gleiches Zeitraster für alle Sensormessdaten zu gewährleisten.

Unterschiedliche Parameter/Variablen innerhalb des Datensatzes können in der SOM unterschiedlich gewichtet werden, so dass eine Variable mit einem hohen Wichtungswert einen höheren Einfluss auf die Distanzberechnungen erhalten wird, wodurch der Fehler dieser Variablen niedriger wird und andererseits der Aufbau der Karte stärker von dieser Variable dominiert wird. Die Gewichtung der einzelnen Parameter ergibt sich anhand des Startmodells.

Ferner werden bei der vorliegenden Erfindung vorzugsweise Messwerte, die einen bestimmten Grenzwert, bezogen auf einen Mittelwert mehrerer Messwerte, übersteigen, nicht in den SOMs berücksichtigt, um eine Verfälschung der SOMs durch "Amplitudenausreißer" in den Messdaten, wie sie beispielsweise durch unachtsame Techniker, Vogelschlag, Sensorfehler oder ähnliches erzeugt werden können, zu vermeiden. Beispielsweise kann ein Mittelwert der hundert höchsten Amplituden berechnet werden und dann alle Messdaten, deren Wert den Wert "0,8 x Mittelwert" überschreitet, aus dem Datensatz entfernt werden.

Falls sich unter den überwachten Maschinen eine mit einem hinreichend ähnlichen oder identischen Anlagenkennwert befindet, kann zusätzlich zur Übernahme des Startmodells auch gleich die Referenz-SOM übernommen werden.

Die Referenz-SOM stellt gewissermaßen den Ausgangspunkt für die Überwachung des Betriebs der Maschine hinsichtlich des Auftretens von Fehlern dar und sollte deshalb im Wesentlichen den Normalzustand bzw. den ungestörten Betrieb der Maschine repräsentieren ("Gutzustand"). Dabei wird während einer Überwachungsbetriebsphase der Maschine der zeitliche Verlauf des Quantisierungsfehlers von anhand des Regelsatzes ausgewählten Sensordaten bezüglich der Referenz-SOM verfolgt, d.h. es wird der den aktuellen Messwerten entsprechende Datenvektor mit dem Gewichtsvektor der BMU verglichen, wobei die Abweichung, d.h. der Quantisierungsfehler, in der Regel ein gutes Maß für die Abweichung des momentanen Anlagenzustands vom Normalzustand darstellt. Typischerweise werden dabei alle in die Referenz-SOM aufgenommenen Parameter verfolgt. Sobald der Quantisierungsfehler ein durch den Regelsatz vorgegebenes Kriterium erfüllt, also beispielsweise einen bestimmten vorgegebenen Schwellwert übersteigt, wird eine Fehlersuche gestartet, da dann vermutet wird, dass eine so große Abweichung des momentanen Anlagenzustands vom Normalzustand vorliegt, dass es wahrscheinlich ist, dass ein Fehler (z.B. übermäßiger Verschleiß) einer Komponente) vorliegt (in diesem Sinne wirkt die Referenz-SOM als "Level 1-SOM").

Typischerweise wird in einem solchen Fall auch ein Alarm an die Diagnosestelle 50 übermittelt.

Da in der Referenz-SOM alle irgendwie relevanten Parameter des Systems aufgenommen sind, lässt sich anhand des Quantisierungsfehlers bezüglich der Referenz-SOM zwar feststellen, dass ein Fehler irgendwo im System vorliegt, es lässt sich jedoch in der Regel noch nicht näher feststellen, wo der Fehler liegt bzw. was für eine Art von Fehler vorliegt.

Zu diesem Zweck wird anhand des Regelsatzes mindestens eine erste "Diagnose-SOM" (oder "Level 2-SOM"; im Beispiel von Fig. 2 als "Diagnose SOM 1" und "Diagnose SOM 2" bezeichnet) mit einer Teilmenge der in der Überwachungsbetriebsphase gewonnenen Sensordaten erstellt, welche dann mit Hilfe des Regelsatzes ausgewertet wird, um eine Fehlerursache zu identifizieren. Die Teilmengenbildung kann dabei hinsichtlich der Messzeitpunkte und/oder der Zahl der Sensoren erfolgen, d.h. es wird bei der Diagnose-SOM nur ein Teil der Messzeitpunkte und/oder ein Teil der Sensoren berücksichtigt. Beispielsweise kann sich aus der FMEA ergeben, dass eine bestimmte Komponente der Maschine hinsichtlich Fehleranfälligkeit besonders kritisch ist, so dass dann hauptsächlich diese Komponente mittels einer entsprechend aufgestellten Diagnose-SOM im Detail analysiert wird. Typischerweise werden in die Diagnose-SOM auch entsprechende Teilmengen der in der Referenzbetriebsphase gewonnenen Sensordaten einfließen, um entsprechende "Gutzustands"-Information in die Diagnose-SOM mit aufzunehmen.

Die Auswertung der Diagnose-SOM umfasst das Erstellen mindestens eines 3D-Schaubilds der Diagnose-SOM; in solchen 3D-Darstellungen wird jeweils einer der in der Diagnose-SOM berücksichtigten Parameter (z.B. vom Rotorhauptlagersensor gemessene Schwingungsamplitude), für jede Koordinate der SOM aufgetragen, wobei sich für bestimmte Fehlertypen in der Regel typische SOM-Bilder ergeben, so dass ein bestimmter Fehler relativ einfach erkannt und zugeordnet werden kann. Die Auswertung der 3D-Schaubilder erfolgt typischerweise durch einen entsprechenden Spezialisten in der Diagnosestelle, wobei unterstützend eine entsprechende automatische Bildverarbeitung, beispielsweise mit automatischer Mustererkennung, verwendet werden kann.

Zum besseren Erkennen von Abweichungen in der Überwachungsbetriebsphase kann für die Auswertung der Fehlersuche des SOM eine der jeweiligen Diagnose-SOM entsprechende Gutzustands-SOM während der Referenzbetriebsphase der Maschine gewonnenen Sensordaten aufgestellt werden und ein 3D-Schaubild der Gutzustands-SOM zwecks Vergleich mit dem 3D-Schaubild der Diagnose-SOM anhand des Regelsatzes erstellt werden. Bei der Auswertung der Diagnose-SOM kann für die jeweilige Diagnose-SOM jeweils ein eigenes 3D-Schaubild für mindestens zwei der in der Diagnose-SOM enthaltenen Parameter erstellt werden, wobei diese Parameter anhand des Regelsatzes ausgewählt werden, d.h. man wird typischerweise die gemäß FMEA besonders fehlerkritischen Parameter detailliert anschauen.

Grundsätzlich kann bei der Auswahl der Diagnose-SOM, d.h. bei der Entscheidung, welche Art von Diagnose-SOM zunächst im Detail betrachtet wird, deren Quantisierungsfehler berücksichtigt werden, d.h. man wählt beispielsweise zunächst diejenige Diagnose-SOM aus, deren Quantisierungsfehler (bezüglich des aktuellen Datenvektors) besonders groß ist, da ein großer Quantisierungsfehler üblicherweise ein Hinweis auf das Vorliegen eines Fehlers ist. Beispielsweise kann man solche SOM als Diagnose-SOM auswählen, deren Quantisierungsfehler über einem bestimmten Schwellwert liegt.

Grundsätzlich können auch Differenz-3D-Darstellungen gebildet und ausgewertet werden, wobei beispielsweise eine Diagnose-SOM von der entsprechenden Gutzustands-SOM abgezogen wird.

Vorzugsweise wird für die Erstellung der Diagnose-SOMs mindestens ein Teil der Sensordaten anhand des Regelsatzes in mindestens zwei Frequenzbänder unterteilt (beispielsweise kann die FMEA ergeben, dass sich bestimmte Fehler bestimmter Komponenten in bestimmten Frequenzbändern besonders gut erkennen lassen). Dabei können sich die Diagnose-SOMs bezüglich des ausgewählten Frequenzbands der Daten mindestens eines der Sensoren unterscheiden. So kann es beispielsweise sinnvoll sein, für einen bestimmten Schwingungssensor mehrere Diagnose-SOMs aufzustellen, die sich hinsichtlich des berücksichtigten Frequenzbands unterscheiden.

Falls die Identifizierung einer Fehlerursache aus der Auswertung der ersten Diagnose-SOM(s) nicht gelingt, wird mindestens eine zweite Diagnose-SOM (im Beispiel von Fig. 2 als "Diagnose SOM 3" und "Diagnose SOM 4" bezeichnet) mit einer anderen Teilmenge der in der Überwachungsbetriebsphase gewonnenen Sensordaten erstellt und ausgewertet, um eine Fehlerursache zu identifizieren. Auf diese Weise kann die Fehlersuche besonders effizient gestaltet werden: Man sucht anhand der aus der FMEA gewonnenen Auswertungsregeln beispielsweise zunächst nach dem häufigsten oder von seiner Auswirkung her kritischsten Fehler, indem man eine diesen Fehler besonders gut darstellende erste Diagnose-SOM (oder gegebenenfalls mehrere solcher ersten Diagnose-SOMs) aufstellt. Falls jedoch ein anderer Fehler vorliegt, wird man bei dieser Vorgehensweise aus dieser ersten Diagnose-SOM(s) keine eindeutige Fehlerursache identifizieren können, so dass dann beispielsweise spezifisch nach dem zweithäufigsten oder zweitkritischsten Fehler gesucht wird, indem eine entsprechende (oder mehrere entsprechende) zweite Diagnose-SOM aufgestellt wird. Dieses stufenweise Vorgehen wird so lange weitergeführt, bis eine eindeutige Fehlerursache identifiziert werden kann.

Da im Laufe der Überwachungsbetriebsphase einerseits zusätzliche Sensordaten und damit Informationen über die Maschine anfallen (d.h. im Vergleich zur Referenzbetriebsphase) und andererseits auch bei der Fehlersuche bzw. -identifizierung zusätzlich Erkenntnisse über das Betriebsverhalten der Maschine gewonnen werden, ist es zweckmäßig, anhand von Auswertungen der Referenz-SOM und/oder der Diagnose-SOMs das Startmodell - und damit den Regelsatz - zu überprüfen und gegebenenfalls zu modifizieren. Auf diese Weise kann im Laufe des Betriebs der Maschine eine Optimierung der Zustandsüberwachung erzielt werden, wobei insbesondere das Startmodell im Laufe der Zeit immer mehr verfeinert werden kann.

Ein dergestalt modifiziertes bzw. verbessertes Startmodell kann dann auch anderen Windenergieanlagen, die mit der vorliegenden Anlage hinreichend vergleichbar sind, d.h. eine identische oder hinreichend ähnliche Anlagenkennzahl aufweisen, als Startmodell zur Verfügung gestellt werden, wobei auch eine um in der Umwachungsbetriebsphase gewonnenen Sensordaten ergänzte Referenz-SOM als Referenz-SOM für andere ähnliche Anlagen zur Verfügung gestellt werden kann.

Dabei kann es insbesondere auch zweckmäßig sein, die Referenz-SOM mit mindestens einem Teil der während der Überwachungsbetriebsphase gewonnenen Sensordaten zu modifizieren, um die Referenz-SOM an Änderungen des Zustands der Anlage anzupassen; dies ist z.B. dann sinnvoll, wenn ein permanenter Alarm (in Form eines zu großen Quantisierungsfehlers) aufgrund der betriebsbedingten Verschlechterung einer Komponente vermieden werden soll, d.h. der verschlechterte Anlagenzustand wird dann als neuer "Gutzustand" festgelegt.

Vor allem in Fällen, wo die Datenfernübertragung zu der Diagnosestelle 50 in irgendeiner Form limitiert ist, ist es zweckmäßig, die SOMs bereits lokal vor Ort in der Datenverarbeitungsanlage 49 in oder in der Nähe der zu überwachenden Maschine zu erstellen, und dann lediglich die in den SOMs enthaltenen Daten mittels Datenfernübertragung an die Diagnosestelle 50 zu übermitteln, um eine Reduktion der übertragenen Daten im Vergleich zu den lokal vor Ort gewonnenen Sensordaten zu erzielen. Jedoch empfiehlt es sich, die gewonnenen Sensordaten vor Ort zu speichern, um die rückwirkende Erstellung unterschiedlicher Diagnose-SOMs vor Ort zu ermöglichen.

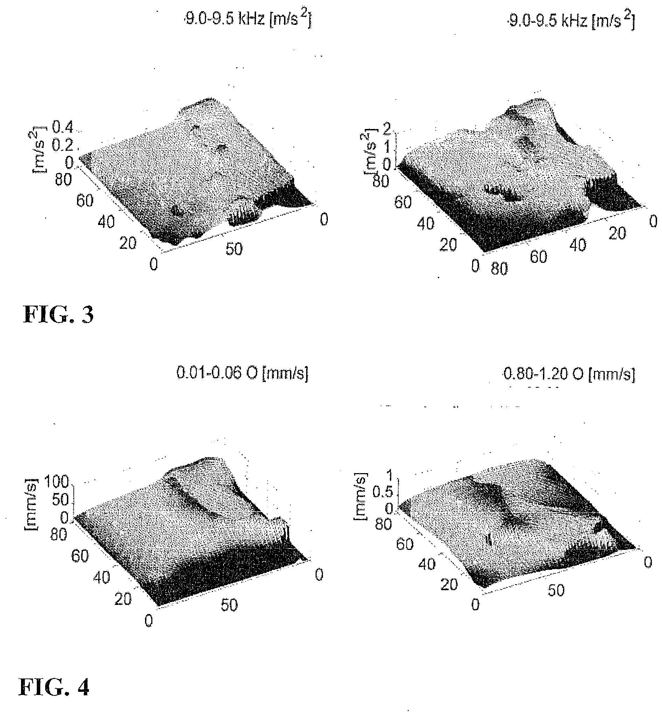

In Fig. 3 sind Beispiele für SOM-Schaubilder in 3D-Darstellung des Beschleunigungskennwerts im Frequenzband von 9 bis 9,5 kHz des Schwingungsaufnehmers an der Generator B-Seite einer Windenergieanlage im Gutzustand (links) bzw. mit einer Generatorschädigung (rechts) gezeigt. Dabei ist ersichtlich, dass die Generatorschädigung eine gravierende Auswirkung auf diesen Schwingungskennwert in diesem Frequenzbereich hat.

In den Fig. 4 sind 3D-Darstellungen von SOMs des Schwingungskennwerts am Rotorhauptlager einer Windenergieanlage bei niederfrequenter Bewertung (0,01 bis 0,06 Ordnung) (links) bzw. bei höherfrequenter Bewertung (0,8 bis 1,20 Ordnung) mit Zahnfrequenz der Planetenstufe (rechts) gezeigt. Dabei ist ersichtlich, dass auf das Hauptlager die meisten turbulenzbedingten Schwingungsschläge im mittleren Windbereich wirken, während die Auswirkungen auf die Planetenverzahnung jedoch relativ gering sind.

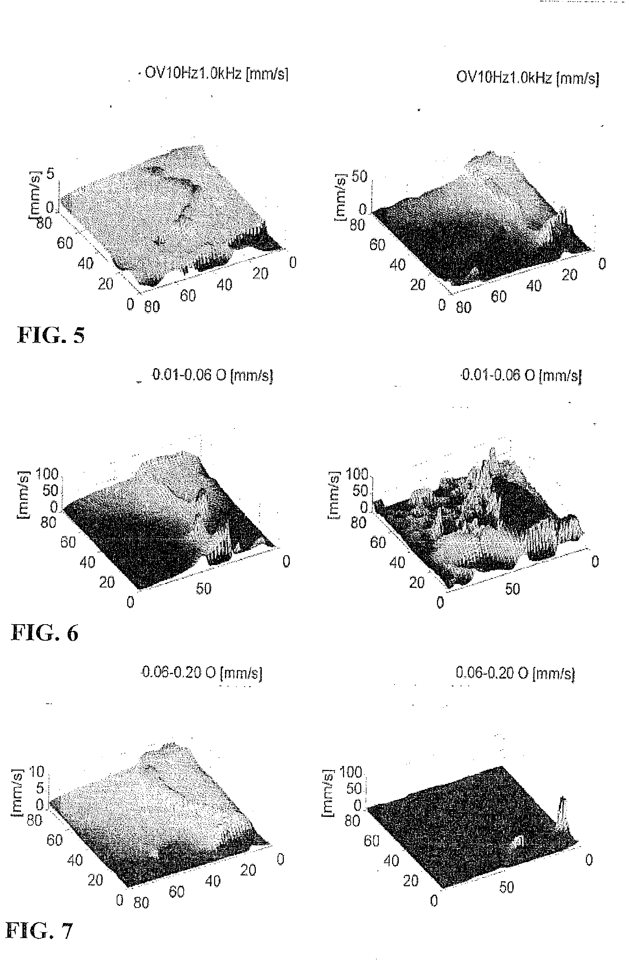

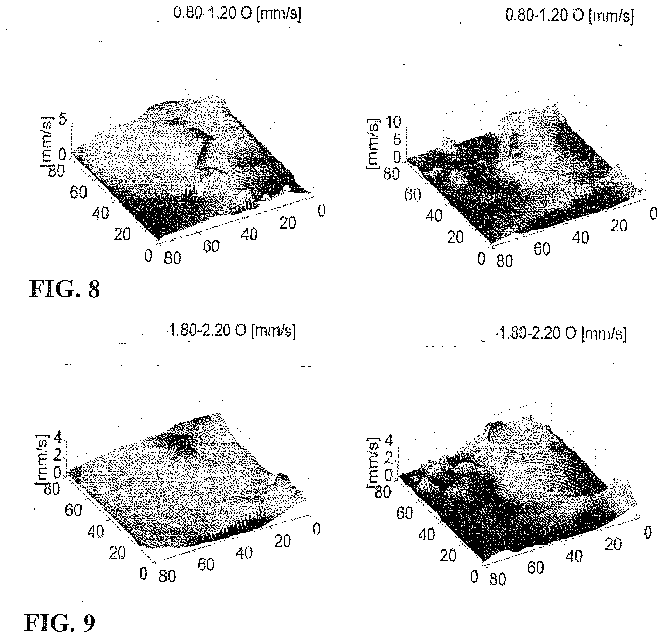

In den Fig. 5 bis 9 sind 3D-Darstellungen von SOMs des Schwingungskennwerts am Rotorhauptlager einer Windenergieanlage für unterschiedliche Frequenzbereiche gezeigt (Fig. 5: 10 Hz bis 1 kHz; Fig. 6: 0,01 bis 0,06 Ordnung; Fig. 7: 0,06 bis 0,20 Ordnung; Fig. 8: 0,08 bis 1,20 Ordnung; und Fig. 9: 1,80 bis 2,20 Ordnung) gezeigt, wobei links jeweils der Gutzustand gezeigt ist und rechts der Zustand nach einem Generatortotalschaden.

Vorzugsweise ist die WEA mit einem System ausgestattet, welches es erlaubt, Änderungen in Windgeschwindigkeit und Windrichtung bereits vor dem Auftreffen an der WEA (und dem dort angebrachten Sensor) zu erfassen, damit die WEA proaktiv auf solche Änderungen reagieren kann, beispielsweise durch entsprechende Pitch-Verstellung. So kann die WEA beispielsweise auf ankommende Böen in optimaler Weise reagieren, um den Energieertrag zu optimieren und die Belastung der WEA-Komponenten zu minimieren (wenn die Bö bereits an der WAE auftrifft, ist es für Korrekturen in der Regel bereits zu spät). Ein solches vorausschauendes Erfassen des Winds kann beispielsweise mittels LIDAR (light detection and ranging)-Systemen erfolgen. Beispielsweise kann der Wind in einer Entfernung von 80 m von der Anlage gemessen werden, was bei einer Windgeschwindigkeit von 20m/s eine Reaktionszeit von 4 Sekunden ergibt. Die Wirksamkeit einer solchen proaktiven Regelung kann dann mittels der hier beschrieben SOM-Analysetechniken überwacht werden.

Die vorliegende Erfindung kombiniert die herkömmliche regelbasierte Analyse der Anlagenzustände mit einer speziellen statistischen Datenauswertung mittels SOMs, wodurch eine massive Datenreduktion durch die Eliminierung redundanter Information ermöglicht wird. Die regelbasierte Analyse mittels FMEA hat dabei im Wesentlichen die Funktion, den "Blickwinkel" der statistischen Auswertung auf den richtigen Gegenstand zu richten, wodurch die Effizienz und Aussagekraft der statistischen Auswertung stark verbessert wird. Ferner kann durch entsprechendes Einspeisen des Erkenntnisfortschritts aus der statistischen Analyse in die regelbasierte Analyse die regelbasierte Analyse mit zunehmender Anlagenbetriebsdauer verbessert werden.

Für die Level 1 Analyse wird zunächst ein relativ globaler Quantisierungsfehler, in den alle oder fast alle gemessenen Parameter einfließen, verwendet, um das Auftreten eines Fehlers zu erkennen. In der nachfolgenden Level 2 Analyse wird das bereits vorhandene regelbasierte Wissen verwendet, um die Fehlerursache mittels SOM-Auswertung in möglichst effizienter und einfacher Weise zu finden. Obschon hierbei in der Regel immer noch die Hilfe eines ausgebildeten Level 2 Spezialisten erforderlich sein wird, kann diesem die Arbeit dadurch erleichtert werden, dass bei verschiedenen Anlagen gleichen Typs der gleiche Fehler die gleiche topologische Veränderung in dem SOM hervorruft und deshalb durch einfache Betrachtung von 3D-Darstellungen der SOMs leicht erkannt werden kann, wenn der gleiche Fehler bei der vorliegenden Anlage oder bei einer Anlage gleichen Typs schon einmal aufgetreten ist. Die mit der statistischen Auswertung einhergehende Datenreduktion erlaubt beispielsweise die Realisierung sehr schneller Messfolgen, wodurch beispielsweise im Falle einer Windenergieanlage auch kurzfristige turbulenzbedingte Schwingungsanregungen erkannt und analysiert werden können.

Grundsätzlich erlaubt die Verwendung der vorgeschalteten FMEA es, bei der Level 2-Analyse die anlagenspezifisch und betriebsspezifisch "richtigen" SOM-Schaubilder zu definieren, um mit den "richtigen" Fehler beschreibenden Kennwerten zu arbeiten.

Bei schneller und zeitgleicher Messung der einzelnen Parameter können nicht nur Turbulenzphänomene sondern auch beim Übergang zwischen verschiedenen Anlagenbetriebszuständen, wie beispielsweise beim Hochlauf der Anlage, auftretende Phänomene behandelt und analysiert werden, indem Trajektorien in den SOMs erfasst und dem entsprechenden Zustand, beispielsweise Hochlauf oder Auslauf der Anlage, zugeordnet werden. Hierdurch wird beispielsweise eine Resonanzverfolgung ermöglicht, wie z.B. eine Anlage beim Hochlauf durch verschiedene Frequenzen in eine Resonanzfrequenz einer Komponente fährt.

Bezüglich der frequenzbandorientierten SOM-Analyse einer Windenergieanlage kann es beispielsweise zweckmäßig sein, das Signal der Schwingungssensoren in die vier folgenden Frequenzbereiche zu unterteilen: (1) 0 bis 10 Hz: Hier liegen niederfrequente Schwingungen von Turm, Gondel und Blättern, also Strukturschwingungen; (2) 10 Hz bis 1 kHz: In diesem Bereich liegen mittelfrequente Schwingungen, die sich als Folge der Anlagenausrichtung ergeben; (3) 1 kHz bis 30 kHz: Hier liegen hochfrequente Schwingungen von Getrieben und Lagern (verursacht durch Komponenten wie Lagerringe, Wälzkörper und Zahnräder); (4) 30 kHz bis 200 kHz: Hier liegen Frequenzen, die bei der Schädigungsfrüherkennung mittels Schock-Puls, SWAN (Stress Wave Analyse) oder AE (Akustische Emission) verwendet werden können; das sind Schwingungen im Bereich der Senderresonanzfrequenzen.

Die Betriebsgrößen Windgeschwindigkeit, Generatorleistung und Drehzahl werden im autarken oder integrierten CMS kontinuierlich mit angepasster Messrate möglichst zeitgleich gemessen. Mit diesen Messgrößen lassen sich z.B zweidimensional die Leistungs- und Drehzahlkennlinien der individuellen WEA ermitteln und mit dem Sollzustand vergleichen. Vergleicht man zehnminütige Mittelwerte, entspricht dies dem statischen Leistungskennfeld der WEA, vergleicht man einminütige Mittelwerte dem dynamischen (z.B. turbulenzbedingten) Leistungskennfeld und vergleicht man sekündliche Werte, lassen sich z.B. spielbehaftete Einflüsse auswerten. Oder man bewertet tendenziell über Wochen, Monate und Jahre das Verhalten der WEA und überwacht die Prozessgrößen auf Veränderungen.

Dabei wird also mindestens ein Teil der Sensordaten in einem zeitlichen Raster gemittelt wird und mit den zeitlich gemittelten Werten wird eine Diagnose-SOM erstellt. Vorzugsweise werden dabei die Sensordaten in mehreren unterschiedlichen zeitlichen Rastern (z.B. einminütig und zehnminütig) gemittelt, wobei für jedes Raster eine separate Diagnose-SOM erstellt wird, und wobei die so erstellten Diagnose-SOMs mit einer auf der Basis der entsprechenden nicht gemittelten Sensordaten (die z..B. sekündlich gewonnen wurden) erstellten Diagnose-SOM verglichen werden.

Nutzt man SOM-Schaubilder der betriebsrelevanten Messgrößen der WEA, lässt sich sehr schnell "auf einen Blick" das Umgebungs- und Betriebsverhalten der WEA dokumentieren und auch benachbarter WEA untereinander vergleichen. Kommt es zu Abweichungen oder zeigen sich veränderte SOM-Schaubilder, lassen sich "Störeinflüsse" eingrenzen, und der Spezialist kann dann gezielt in seiner üblichen wissensbasierten Diagnose die Verursacher analysieren.

Parametrierung, Auflösung, Skalierung und Darstellung der SOM Schaubilder werden mittels FMEA maschinen- und anwendungsbezogen festgelegt und bei vergleichbaren Anlagen und Phänomenen gleich belassen. Dies erlaubt dann auf recht einfache- Art und Weise auch den Vergleich ähnlicher Maschinen und Anlagen bzw. ermöglicht Datenreduktion, Überprüfen der Datenqualität und/oder eine vereinfachte Modellbildung. Die Phasengrenzen in der U-Matrix lassen sich identifizieren und bei instationären Zuständen Trajektorien zur Identifikation der Phänomene berechnen. SOM Schaubilder können täglich, wöchentlich, monatlich erzeugt, aufsummiert und/oder bezüglich Veränderungen analysiert werden.

Das Betriebs- und Prozessverhalten wird "auf einen Blick" beschreibbar. Bezieht man dann noch die Häufigkeitsverteilungen mit ein, werden Lebensdauerabschätzungen und Gefährdungsanalysen möglich. Dabei kann man je nach auszuwertenden Phänomenen eine entsprechende Wichtung ähnlich wie in der üblichen Signalanalyse verwenden (z.B. Pareto 80/20-Analyse)

### Weitere Beispiele

Nachfolgend sind einige Beispiele dafür beschrieben, in welcher Weise SOMs bei der Zustandsüberwachung von WEA verwendet werden können.

### Erkennen von Sensor- und Systemfehlern

SOM Schaubilder lassen sich beispielsweise benutzen, um abzulesen, wie effizient eine WEA betrieben wurde oder ob es längere Stillstände mit Wind gab, indem Schaubilder der Windgeschwindigkeit und Schaubilder der Leistung der WEA betrachtet werden. So lässt sich durch die gleichsinnig orientierten Schaubilder (gleiche Anlagenzustände bei gleichen SOM-Koordinaten) auf einen Blick ablesen, wo ordentlich produziert wurde oder wo der Wind stark war und die Anlage keine Leistung erzeugte. Wenn z.B. das Aussehen des SOM-Schaubilds der Leistung unverändert bleibt, dafür aber das Windgeschwindigkeitssignal ungewöhnlich aussieht, kann auf einen allmählichen Ausfall des Windsensors geschlossen werden. In ähnlicher Art und Weise lassen sich auf Basis der SOM-Schaubilder Fehler in der Systemkonfiguration, in den Applets, in der Verkabelung, mögliches Vertauschen der Anschlüsse der Sensoren für Leistung und Windgeschwindigkeit usw., erkennen.

### Einschätzen der Vor-Ort-Bedingungen für die WEA und Erkennen der Anlagencharakteristik

Vergleicht man SOM-Häufigkeitsverteilungen und SOM-Schaubilder baugleicher WEA untereinander, lassen sich Gut- und Schlechtanlagen "auf einen Blick" identifizieren, und es lässt sich auch relativ leicht erkennen, wie sich die individuelle WEA z.B. in Starkwindphasen verhält. Zusätzlich lassen sich aus den SOM-Schaubildern der Windgeschwindigkeit und Leistung standortabhängige Unterschiede und gegenseitige Beeinflussungen erkennen, "auf einen Blick" ablesen und die zugehörigen Modelle trainieren.

Nimmt man die Drehzahl als weitere Beobachtungs-und Führungsgröße hinzu, läßt sich die jeweilige Anlagencharakteristik ablesen (drehzahlfest, drehzahlvariabel, pitchgeregelt, stallgeregelt), oder man kann Besonderheiten im Anlagenregelverhalten erkennen. Ebenso läßt sich bei der polumschaltbaren WEA aus den SOM Schaubildern ablesen, ob bestimmungsgemäß umgeschaltet wird bzw. man kann über die Anzahl der Hits bewerten, ob ggf. zu oft umgeschaltet wird.

### Einschätzen des Betriebsverhaltens von WEA

Bewertet man neben den SOM-Schaubildern von Windgeschwindigkeit, Leistung und Drehzahl auch SOM-Schaubilder von anderen Betriebs-, Prozess- und Schwingungsgrößen, lassen sich weitere Anlagencharakteristika und Abweichungen vom normalen Lauf- und Betriebsverhalten "auf einen Blick" erkennen. Möglich wird damit sogar ein Performance-Monitoring unterschiedlicher WEA, woraus man beispielsweise erkennt, dass eine Windenergieanlage bei Niedrigwind deutlich öfters leer hochfährt als eine benachbarte Anlage. Hat man CMS im Einsatz, die mit höheren Messraten zeitgleich messen, zeigen sich solche Abweichungen nicht erst nach Wochen, sondern schon nach wenigen Tagen. Damit kann ein klassisches Condition Monitoring System auch zur Verhaltens- und Qualitätskontrolle bauähnlicher Anlagen verwendet werden. Die "Schärfe" und der bevorzugte Aussagegehalt der Schaubilder wird vom Spezialisten zuvor anwendungsbezogen parametriert.

### Einschätzen des allgemeinen Schwingungsverhaltens der WEA

In VDI 3834 wird auf Basis von Beurteilungsschwingkennwerten *v* und *a,* die ab 20% Last ermittelt werden, entschieden, wie gut die Laufgüte der jeweiligen WEA ist. Nutzt man zur "Gütebewertung" SOM-Schaubilder, läßt sich leistungsbezogen sogar der gesamte Arbeitsbereich bezüglich Schwinggüte "auf einen Blick" kontrollieren und bewerten. Dazu könnte erfindungsgemäß eine "Maskierung" oder ein Maskierungsfenster gesetzt werden, um betriebsabhängige Kennwerte abzuleiten. Stellt man Abweichungen in den Amplituden der Schaubilder fest, kann schon aus der Grundcharakteristik der Schaubilder abgelesen werden, in welchem Zustand Verbesserungspotential hinsichtlich Schwingungen besteht, Resonanzen wirken und/oder der "Maschinenkomfort" zu verbessern ist. Oder man vergleicht die mit unterschiedlicher Messrate erfassten Schwingkennwerte, um die Dynamik und/oder ggf. mitwirkenden Turbulenzen auf die Schwingwerte abzulesen. In den Schaubildern wird bevorzugt mit Dimensionen in Anlehnung an Schwingungsnormen und Nennparametern gearbeitet. Die normierte Version ist möglich, aber unübersichtlich.

In den Schaubildern lassen sich "auf einen Blick" kritische Schwingbereiche erkennen und ihre Auswirkung richtungs- und komponentenspezifisch analysieren und bewerten. Eine Kartographierung/Fensterung der Schaubilder wird möglich und läßt sich z.B. mit FEM-Analysen vergleichen.

### Bewerten der drehfrequenten Triebstrangschwingungen

In den meisten Triebsträngen von WEA sind die drehfrequenten Maschinenschwingungen der schnellen Getriebewelle, der Abtriebskupplung und des Generators dominant. Es gibt aber auch Triebstränge, wo die Zahneingriffsfrequenz der Planetenstufe in gleicher Größenordnung wie die Drehfrequenz der schnellen Welle liegt, was zu mehr Schwingungen und auch zu mehr Schäden führt. Deshalb sind SOM Schaubilder um die erste Ordnung (0,8 bis 1,2 Ordnung) hilfreich. Grundsätzlich sollten wirklich vergleichbare Triebstränge über eine Maschinencodierung identifiziert werden. Erst dann lassen sich Gut-Triebstränge identifizieren und auch charakteristische Höhenlinien und Muster in den SOM-Schaubildern vergleichen. Es wird auch anhand einer Mustererkennung die Identifizierung von Getriebe- und Generatorhersteller ermöglicht. Nachweisbar ist anhand von Schaubildern aber auch, dass eine Körperschallleitung zu anderen Triebstrangkomponenten erfolgt und dass bei einigen WEA-Typen die Getriebe schwingungstechnisch dominant wirken.

In ähnlicher Art und Weise kann der Schwingungsspezialist Verzahnungen oder andere Maschinenkomponenten "auf einen Blick" analysieren und bewerten.

### Bewerten der elektrisch bedingten Schwingungen

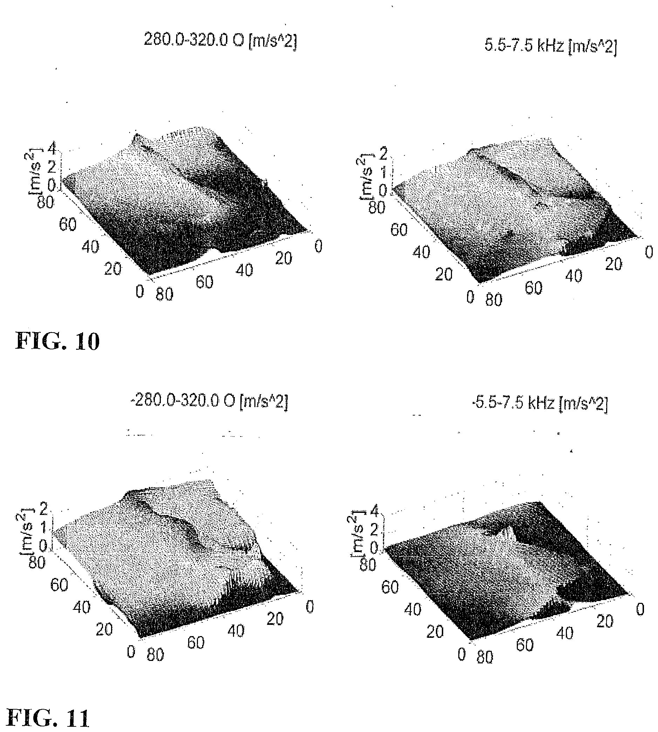

Mit Hilfe der Beurteilungsbeschleunigungen läßt sich in analoger Art und Weise kontrollieren, ob die jeweilige WEA im normzulässigen Bereich läuft und z.B. anhand der frequenz- und/oder ordnungsbewerteten Diagnosekennwerten analysieren, wie sich der Umrichter und/oder der Generator elektrisch schwingungstechnisch verhält. Wieder ist es der Schwingungsspezialist, der FMEA-basiert die notwendigen Kennwerte definiert, die zugehörigen SOMs aktiviert und dann rückschließt, was wann dominiert. In Fig. 10 bzw. 11 sind für zwei unterschiedlichen Umrichter/Generator-Kombinationen gefilterte Schaubilder der Ordnung (links; 280- 320 Ordnung) und der Frequenz (rechts; 5,5 - 7,5 kHz) gezeigt. Eine Dominanz in der Ordnung bedeutet, dass der Generator dominiert. Dominierende Anregungen in der Frequenz sind ein Indikator, dass der Umrichter dominiert. Im rechten Bild von Fig. 11 läßt sich sogar ablesen, dass nur ein enger Lastbereich zu mehr Umrichter bedingten Zusatzschwingungen führt.

### Bewerten der Lageranregungen

Durch das Ausblenden von elektrisch bedingten Erregern in den Beschleunigungen schafft der Diagnosespezialist eine Voraussetzung, um den Energiegehalt der höherfrequenten Schwingungen gezielt auf last- und betriebsabhängige Veränderungen zu überwachen. Dies dient u.a. dem Erkennen von Mangelschmierung, Kavitation und von fortgeschrittenen Lagerschäden. Die erfindungsgemäße Vorgehensweise erlaubt es ggfs. zusätzlich, z.B. nicht korrekte Loslagerfunktionen, Überschmierungen etc. zu erkennen. Bei solchen Fehlererscheinungen ist zu berücksichtigen, dass durch das erfindungsgemäße zweistufige SOM-Verfahren vermieden werden kann, dass Fehlerzustände als Gutzustände beim Level 1 SOM-Monitoring fälschlicherweise eintrainiert werden.

### Bewerten der niederfrequenten Struktur- und Anlagenschwingungen

Vergleicht man das strukturbedingte Aussehen der SOM-Schaubilder vergleichbarer WEA an verschiedenen Messstellen miteinander, lassen sich bei bestimmungsgemäß laufenden Triebsträngen ähnliche SOM-Schaubilder ablesen. Erst wenn es zu Abweichungen und Anlagenstörungen kommt, verändern sich lokal oder insgesamt die Schaubilder und Charakteristika in den einzelnen Schaubildern. Somit lassen sich deshalb sinnvolle Level 1-SOM-Kennwerte oder Kennwertgruppen am besten erst dann ableiten, wenn charakteristische Schaubilder existieren.

### Bewerten der niederfrequenten Turmschwingungen (Turmbauart)

Gittermasttürme sind deutlich weicher als Rohrtürme, was sich infolge der Turbulenzen sowohl axial als auch horizontal bei hohen Windgeschwindigkeiten und gewissen Abweichungen in der Massenunwucht und den Blattwinkeln in mehr niederfrequenten Schwingungen bemerkbar machen kann. Dazu ist es aber erforderlich, weniger gemittelte Schaubilder zu verwenden, um auch die Turbulenzeinflüsse mit zu berücksichtigen. Es ergeben sich Charakteristika, die sich turmseitig als auch rotorblattseitig in den SOM-Schaubildern der niederfrequenten Schwingungen "auf einen Blick" erkennen lassen. Werden zusätzliche Eigenfrequenzen angeregt, kommt es zu weiteren Amplitudenanstiegen, die auch nur lokal wirken können. Anregend können in diesem niederfrequenten Bereich die Rotordrehfrequenz und/oder die Blattpassierfrequenz sein. Charakteristisch für einen Gittermastturm ist beispielsweise, dass er bei Teillast Schwingungen durch mehr Nachgiebigkeit besser "dämpft".

Weitere Einflussgrößen auf die niederfrequenten Schwingungen sind die Turmsteifigkeit, die Turmhöhe und die Gondelmasse. Einflüsse der Gründung, von Aufwinden und von Wellenschlag bei Offshore-Anlagen sind ebenfalls denkbar. Höhere Rohrtürme oder dünnwandigere Rohrtürme sind weicher und ähneln dann in ihrer Struktur den Gittermasttürmen. Betontürme sind deutlich steifer und lassen sich auf Basis von Schaubildern ebenso dauerüberwachen. Zur Überwachung von Turmschwingungen ist die Darstellung beispielsweise der 0,01 bis 0,06 Ordnung in radial horizontaler Messrichtung und in axialer Messrichtung zweckmäßig.

### Erkennen der Rotorblattypen bzw. des Rotorblattherstellers

Mittels geeignet gefilteter und/oder gemittelter SOM Schaubilder lassen sich Rotorblatttypen erkennen und klassifizieren. Eine solche SOM-Bewertung ergibt wertvolle Informationen auch zur Rotorblattentwicklung und zum Verhalten bei unterschiedlichen Winden und erlaubt auch Schlußfolgerungen, wie sich Turbulenzen auswirken. Zu berücksichtigen ist ebenso, dass die Rotorblätter auf Gittermasttürmen sich anders als auf Rohrtürmen verhalten.

Verändert sich nun das Aussehen solcher SOM Schaubilder über Wochen, Monate oder Jahre, kann auf Rotorblattschäden geschlossen werden. Wird das Verfahren dann direkt mit Daten aus den Rotorblättern (egal welche Größe) ausgeführt, läßt sich kontrollieren, wie das individuelle Blatt sich verhält. Denkbar sind auch auf einzelne Rotorblätter getriggerte Schaubilder. Dazu muß dann nur ein zusätzlicher Phasengeber zum Finden von Rotorblatt Nr. 1 montiert werden.

### Erkennen und Unterscheiden von Rotorblattunwuchten

Grundsätzlich ist zu unterscheiden zwischen aerodynamischer und Massenunwucht. Während die aerodynamische Unwucht am meisten in axialer Richtung wirkt, lassen sich Massenunwuchten am besten in radialer Richtung erfassen. Durch Vergleich "auf einen Blick" der in verschiedenen Richtungen gemessenen SOM-Schaubilder wird es überschaubarer, zwischen aerodynamischer und Massenunwucht zu unterscheiden bzw. zu kontrollieren, wie der Einfluss der Turbulenzen/Regelung ist. Möglich wird damit auch ein Protection von Rotoren. Aus dem Vergleich lassen sich instationäre Empfindlichkeiten erkennen. Ein solches Beispiel wurde oben bereits im Zusammenhang mit Fig. 4 diskutiert.

### Bewerten von Schwingungs- und Montagezuständen von Generatoren

Hierzu können beispielsweise für die A- und B-Seite die Schwingsummenkennwerte in Anlehnung an VDI 3834 und die Schwingkennwerte um die Drehfrequente des Generators dargestellt werden.

### Bewerten von Schwingungs- und Laufzuständen von Getrieben

Will man das Schwingungs- und Laufverhalten von Getrieben auswerten, nutzt man im ersten Schritt die jeweiligen Summenschwingkennwerte, und geht dann wie beim üblichen Condition Monitoring über charakteristische und/oder die dominierenden Frequenzen oder Ordnungen in die Amplitudenspektren des jeweiligen Getriebes. Damit wird auch die Getriebediagnose über den gesamten Anwendungsbereich "auf einen Blick" erleichtert, und der Spezialist kann Zwänge, Schäden usw. identifizieren.

### Erkennen von Ausrichtabweichungen zwischen Getriebe und Generator

Eine Ausrichtung zweier aneinander gekuppelter Maschinenkomponenten gilt dann als optimal, wenn bei Maximallast ein schwingungsarmes Laufverhalten vorliegt und die Kupplung zwangsfrei die Abweichungen ausgleicht. Es ist in der Windbranche durch die meist doppelelastisch gelagerten Triebstrangkomponenten üblich, dass bei Teillast höhere Schwingungen wegen der damit verbundenen Ausrichtabweichungen wirken. Zur Analyse können besipielsweise drehfrequente und doppeldrehfrequente Schwingungsschaubilder für den Generator. erstellt werden.

### Erkennen von Zusatzschwingungen auf den Triebstrang

Analysen von SOM Schaubildern lassen sich nutzen, um Ursachen für erhöhte Schwingungen zu identifizieren.

### Erkennen von Resonanzschwingungen

Bei einer unzulässigen Resonanzanregung kann z.B. jedes Mal, wenn die Anlage beschleunigt, zu erhöhten Schwingungen kommen. Dies läßt sich dann auch aus der zugehörigen Trajektorie ablesen. Solche Analysen bedürfen einer Messtechnik, die schnell und zeitgleich misst.

### Einfluss von niederfrequenten Rotorblattschwingungen und Rotorunwuchten auf den elastisch gelagerten Generator und das elastisch gelagerte Getriebe

Zu diesem Zweck kann man beispielsweise SOM-Schaubilder von niederfrequenten Schwingungen, gemessen über längere Zeiträume, zuerst in radialer Messrichtung am Hauptlager, dann am Generator A-Lager und dann am Generator-B-Lager, erstellen. Führt man in ähnlicher Art und Weise die Bewertung der drehfrequenten Schwingungen aus, lassen sich das normale Schwingungsverhalten des Generators bewerten und vergleichen. Als Störgrößen entstehen bei den drehfrequenten Schwingungen insbesondere Unwuchten. Besonders leicht lassen sich auf einen Blick auch die Resonanzanregungen identifizieren. Vergleicht man nun die SOM-Schaubilder der Drehfrequenz mit den SOM-Schaubildern der Schwinggüte, lässt sich bei Abweichungen auf weiteren Tiefenanalysebedarf schlußfolgern. Bei solchen Abweichungen könnte das CMS beispielsweise auch automatisch hochauflösende Zusatzmessungen ausführen und separat in einem internen Massenspeicher abspeichern, den man temporär ausliest oder auswechselt.

### SOM- Analyse eines Generatorausfalls

Ein Beispiel für einen plötzlichen Totalschaden an einem Generator ist in den Fig. 7-11 gezeigt. Zuvor war der Generator etwa 6 Monate lang mit hohen Schwingungen betrieben worden. Anhand von SOM-Schaubildern der ordnungsselektiven Schwinggeschwindigkeiten läßt sich die Entwicklung des Ausfalls erkennen. Dabei ist bei diesem Beispiel auffällig, dass vermutlich infolge von Lockerungserscheinungen nur die niederfrequenten Kennwerte und der Summenkennwert auf der A-Seite stark beeinflusst wurden, jedoch weniger die drehfrequenten und doppeldrehfrequenten Komponenten. Es zeigt sich des weiteren ein zusätzliches "Schlagen" mit Schaden.

Mit der Erfindung können beim Condition Monitoring und der Diagnose Ausrichtzustände, Wuchtzustände, Maschinenzustände, Verzahnungs- und Wälzlagerzustände auf einem Blick über SOM-Schaubilder bewertet und eingeschätzt werden.

Beispielsweise können Rückschlüsse auf Verschleissparameter und Komponentenverträglichkeit auf Basis von SOM-Schaubildern gezogen werden.

Struktur-, Anlagen- und Turbulenzeinflüsse können durch unterschiedliche Messwertvorbehandlung und anschließender SOM-Auswertung unterschieden werden.

Auf Basis der U-Matrix können Entscheidungen über die Sinnhaftigkeit weiterer Tiefenanalysen bzw. zusätzlicher Nachbehandlungen von Messdaten getroffen werden.

Einzelne Störereignisse können durch eine Kontrollabfrage abgefangen werden. Dazu werden die Hits (Anzahl der Ereignisse) und die Amplituden (z.B. bezogen auf VDI 3834) bzw. gesetzten Alarm- und Abschaltwerte begrenzt, um Modellverzerrungen zu vermeiden.

Die Phasengrenzen der U-Matrix können typischen Zuständen zugeordnet werden und die Gewichtsvektoren können auf Basis von Nennparametern abgeglichen werden.

Gemäß einem Beispiel wird erst dann komplett oder im Event gemessen, wenn es Veränderungen im Quantisierungsfehler oder anderer SOM-Charakteristika gegeben hat.

Gemäß einem Beispiel werden Gewichtungsfaktoren bezüglich ihrer Abhängigkeiten festgelegt bzw. es wird die dahinterliegende Wirkkette berücksichtigt.

In Abhängigkeit vom Maschinen- und Anlagentyp können plötzliche oder stossartige Ereignisse mittels Filterung, Tayloring oder anderen geeigneten Algorithmen ausgeblendet werden.

Antriebs- und abtriebsseitige Drehzahlkennwerte können bezüglich Plausibilität SOM-basiert verglichen werden, und Abweichungen können als Diagnosekriterium verwendet werden.

Charakteristische Merkmale können an unterschiedlichen Messpunkten überwacht und auf Veränderungen verglichen werden. Dies reduziert auch die Fehlertoleranz bzw. Abhängigkeit von einzelnen Sensorfehlern.

SOM Schaubilder können miteinander leistungsbezogen und maschinenbezogen verglichen werden, um auf Maschinengüten zu schließen bzw. gleiche Maschinen miteinander zu vergleichen bzw. im CMS zu konfigurieren.

SOMs können nutzsignalabhängig konfiguriert werden. Ein Anfahren bzw. instationäre Zustände werden nacheinem sequentiellen Algorithmus und stationäre Zustände nach dem Batch-Algorithmus behandelt.

Vortrainierte Modelle können im embedded System laufen, damit die Datenmenge spürbar reduziert werden kann.

Der Spezialist kann konfigurieren, welche Erscheinung er mit welchem Parameter mittels SOM-Datenanalyse nachträglich oder online bewerten will. Zugleich definiert er in Abhängigkeit von den Signalen weitere Analysen.

In den SOM-Schaubildern können Hüllkörper und/oder Hüllflächen, die Warn- und Alarmzustände beschreiben, gebildet werden, und nach Durchdringen zusätzliche Analysen automatisch aktiviert werden.

Es können Amplituden-SOM-Schaubilder und zugehörige Häufigkeiten bewertet werden, um erwartete Schädigungsgrade und Lebensdauerminderungen abschätzen zu können. Damit lassen sich aber auch Restlebensdauern abschätzen und Restnutzungsprognosen ableiten.

Turbulenzwirkungen und -auswirkungen können durch Vergleiche unterschiedlich parametrierter Schaubilder ermittelt werden .

Selektive Schwing- und Diagnosekennwerte können in SOM-Schaubildern zur systematischen Maschinenanalyse verwendet werden und auf Basis von Diagnose/Schwingcodierungen automatisch überwacht werden.

Zustandsgrößen, Steuerungsgrößen, Regelgrößen und Betriebsgrößen können SOM-basiert verwendet werden, um die Anlage im optimalen Arbeitsbereich zu betreiben, und bei Abweichungen vom Idealzustand können Fahrweisen angepasst werden.

Aus SOM-Schaubildern können unzulässige Arbeitsbereiche vermieden und/oder ausgeblendet werden.

Wind- und Beanspruchungsprofile können SOM-basiert ermittelt werden, und zur Konfiguration vergleichbarer Anlagen/Parks verwendet werden.

### Beispiele für andere Maschinen

Die vorliegende Erfindung kann dazu verwendet werden, auf Basis von multisensoriell ermittelten Zustandsinformationen aktiv in den Prozesszustand und Betriebszustand einzugreifen, so dass die jeweilige Maschinenkomponente in ihrem optimalen Arbeitsbereich verwendet werden kann. Insbesondere können in der betreffenden Anlage optimale Arbeitspunkte und Betriebsweisen mit möglichst schwingungsarmen Betriebsverhalten erkannt und verwendet werden.

Dies sei nachfolgend an mehreren Beispielen erläutert:

### Draglines

Draglines (auch als Kratzbagger oder Eimerseilbagger bezeichnet) sind beispielsweise im Tagebau verwendete Bagger mit Schaufeln mit Volumina in der Größenordnung von 10m³, bei welchen in vorteilhafter Weise eine Schwingungsüberwachung mittels dem erfindungsgemäßen Verfahren erfolgen kann. Hierbei kann beispielsweise mittels Verfolgung von Trajektorien in SOMs eine Resonanzverfolgung realisiert werden. Beispielsweise weist der Baggerarm mit voller Schaufel andere Resonanzen als bei der Fahrt mit leerer Schaufel auf. Für das Schwingungsverhalten kommt es dabei aber nicht nur auf die Menge sondern auch die Art des Schaufelinhalts an. Erzgestein hat z.B. eine andere Dichte als Lehm). Das Schwingungsverhalten wird ferner z.B. auch von der Fahrtrichtung beeinflusst. Bei der Fahrt mit voller Schaufel zum Lkw hat der Baggerarm also eine andere Resonanzfrequenz als bei der Fahrt mit leerer Schaufel zurück; da bei der Baggerüberwachung die Drehrichtung mit zu den Standardparametern gehört, kommen die Fahrt zum Lkw und die Fahrt zurück auf unterschiedliche Trajektorien und machen somit in der SOM verschiedene Baggerarm-Resonanzen erkennbar.

Enstprechend ist es zweckmäßig, wenn bei der Klassifizierung der Bagger mittels Anlagen-Kennzahl beispielsweise die Menge des Schaufelinhalts (bzw. das Schaufelvolumen), die Art des Schaufelhalts bzw. das zu baggernde Material und die Fahrtrichtung der Vollfahrt bzw. Leerfahrt in die Anlagen-Kennzahl eingehen.

### Schiffsantriebe

Schiffsbetreiber wünschen sich, dass mit möglichst wenig Treibstoff effizient und schwingungs- bzw. wartungsarm Schiffe angetrieben werden. Schiffspropeller werden optimiert, zusätzliche Leiteinrichtungen montiert, um Verbesserungen im Wirkungsgrad zu erreichen und schädigende Kavitation zu vermeiden. Des weiteren sollte der Verbrennungsmotor möglichst im optimalen Arbeitspunkt laufen, damit höchste Effizienz erreicht wird. Dies ließe sich mit permanenter Drehmomenterfassung realisieren. Doch Drehmomentsensoren sind aufwendig, teuer und deshalb an Verbrennungsmotoren nur selten integriert.

Lediglich bei Abnahmemessungen in der Schiffsbranche werden Drehmomentsensoren zu Leistungskontrollen und für Drehschwingungsnachweise verwendet. Alternativ versucht man, z.B. durch Kupplungsmonitore solche Informationen zu ermitteln.

Nur bei großen Schiffen mit Doppelantrieb werden Drehmomentsensoren zunehmend integriert. Hier nutzt man sie beim Schiffsbetrieb nur zum Erreichen einer gleichmäßigen Fahrweise zwischen Backbord- und Steuerbord-Seite.

Doch jede Schiffsstruktur, Fahrweise, Beladung, Wellenhöhe, Windrichtung, Strömungen hat Besonderheiten, die sich auch auf Schwingungen auswirken. Durch proaktives Condition Monitoring auf Basis von SOM lässt sich der Schiffsantrieb in seinem optimalen Arbeitspunkt betreiben und man kann erkennen, wenn sich erlernte Fahrweise auch durch Veränderungen im Maschinenzustand ankündigen.

### Thrusterantriebe

Insbesondere bei Bohrplattformen haben mehrere Thruster dafür zu sorgen, dass auch bei hohem Wellengang und unabhängig von Windrichtungen Positionen erhalten bleiben. Da die verwendeten Thrusterantriebe hochdynamisch beansprucht werden und auch schadensanfällig sind, verbreitet sich das schwingungsbasierte Condition Monitoring zunehmend. Condition Monitoring mit SOM kann hier z.B. rechtzeitig Verschlechterungen im Maschinenlaufverhalten anzeigen, so dass Havarien vermieden werden. Condition Monitoring mit SOM kann hier auch helfen, herauszufinden, ob das Verhalten der vier oder acht Thruster wirklich effizient zueinander ist. Durch Betriebsweisen im optimalen Arbeitspunkt lassen sich sowohl Energiekosten einsparen als auch Zusatzschwingungen und Zusatzbeanspruchungen reduzieren

### Mahlanlagen

Insbesondere Vertikalmühlen werden zum Mahlen von unterschiedlichen Produktqualitäten verwendet. Dabei werden Mühlenparameter so verändert, dass die gewünschte Feinheit bei maximalem Durchsatz erreicht wird. Entstehen im Mahlprozess zu hohe Schwingungen, wird entweder abgeschaltet und/oder auf Basis von Drehmomentmessungen signalisiert, dass das Fahrverhalten zu ändern ist, bis wieder ein stabiles Laufverhalten erreicht ist. Ist die Vertikalmühle drehzahlveränderlich, verstärken sich die Störeinflüsse weiter. Durch proaktives Condition Monitoring auf Basis von SOM lassen sich typische Prozesszustände besser erkennen und bei Abweichungen früher nachregeln. Damit reduziert sich das Risiko der unzulässigen Beanspruchung des Antriebes, was wiederum lebensdauerverlängernd ist. Zugleich entsteht für den Anlagenhersteller die Möglichkeit, mehr Anlagendurchsatz zu verkaufen bzw. Vergütungen auf Basis von Anlagendurchsatz zu verwenden.

### Triebwerke

Werden Triebwerke im Leistungsgrenzbereich betrieben, verstärkt sich die normale Abnutzung. Solche abnutzungsintensiven Grenzbereiche können vorliegen, wenn noch nicht die optimale Betriebstemperatur erreicht wurde, oder zu hoch- oder niedertourig gefahren wird. Online-Partikelgrößenverteilungszähler liefern Informationen über den aktuellen Abrieb bzw. den "im Öl schwimmenden" Verschleiss.

Werden Partikelgrößenverteilungen mit proaktiven Conditon Monitoring auf Basis von SOM gekoppelt, lassen sich Bereiche mit ungewünschter Abnutzung schon während des Betriebes erkennen und gegensteuern.

### Industrieturbinen

Bei Turbinen werden bei kontinuierlichem Betrieb Wellenschwingungen auf Grenzwertüberschreitungen überwacht. Kommt es zu Abweichungen, nutzt man gern Orbitanalysen, um entsprechende Tiefendiagnosen auszuführen. Anfahr- und Auslaufvorgänge werden nur in Sonderfällen durch Spezialisten bewertet, womit wertvolle Zustandsinformationen verloren gehen. Mit proaktiven Condition Monitoring auf Basis von SOM lassen sich auch Anfahrvorgänge "erlernen" und einmal erlernte instationäre Betriebszustände modellbasiert vergleichen bzw. festgestellte Unterschiede leichter erkennen.

### Pumpen

Drehzahlveränderliche Pumpen laufen Gefahr, in Kavitationszustände zu kommen oder ineffizient zu laufen. Die sich bei Kavitation ergebenen breitbandigen Schwingungen sind in der klassischen Schwingungsdiagnose zwar ein Kriterium zur Ursachenzuordnung, jedoch nicht eindeutig zuordbar. So hat auch jede Pumpe in Abhängigkeit vom Medium und von der Ausführung seine besonderen Schwingungsbilder. Es ist dann Aufgabe des Diagnostikers, die festgestellten Abweichungen zu interpretieren und mit Erfahrungen/Ergebnissen von Vergleichsanlagen zu interpretieren Dies ist mühsam, aufwendig und bedarf umfassendes Wissen. Erschwerend kommt dazu, dass einsatzspezifische Strukturresonanzen und/oder Lagerschäden im gleichen Frequenzbereich ebenso zu Zusatzstörschwingungen führen können. Kavitation bedeutet aber auch Veränderungen in den Prozessgrößen wie z.B. mehr Lastschwankungen und Druckpulsationen.

Ist das einsatzspezifische Pumpenverhalten "eingelernt", lassen sich übliche Arbeitsbereiche zuordnen und überwachen. Tritt Kavitation auf, oder kommt die Pumpe nahe zu seiner Phasengrenze, kann bei der erfindungsmäßigen Überwachung mittels SOM früher reagiert werden.

### Lüfter

Insbesondere große Lüfteranlagen werden in Abhängigkeit vom Prozess geführt und das Lauf- und Betriebsverhalten unterscheidet sich z.B. zwischen Tag- und Nachtbetrieb. Da schon aus Energiegründen drehzahlveränderliche Lüfter bevorzugt werden, besteht natürlich die Gefahr, dass Resonanzen entstehen, die zur ungewollten Anlagenabschaltung führt. Im Leitartikel der Telediagnose, Heft 11, "Wenn der Ofenventilator abschaltet" von Dr. E. Becker (s. www.telediagnose.com) wurde berichtet, wie dann durch mühsame Analysearbeit ein Drehzahlbereich mit Resonanzen identifiziert und nachträglich im Leitsystem ausgeblendet wurde. Mit einem proaktiven CMS auf Basis von SOM können ungewöhnliche Zustände, wie beispielsweise störende Axialschwingungen, früh identifiziert werden.

### Wasserkraftanlagen

Wasserkraftwerke haben unterschiedliche Betriebszustände, die mit regelbasierten Condition Monitoring und regelbasierter Steuerung sich betreiben lassen. Eine Interpretation der zugehörigen Wellenschwingungen bedarf jedoch typischerweise des Spezialisten, der dann die angezeigten Änderungen in "Kleinarbeit" mit Prozesszuständen abgleicht. Beim proaktiven Condition Monitoring auf Basis von SOM können die typischen Betriebs- und Schwingungszustände eingelernt und dann betriebsklassenabhängig hinsichtlich Veränderungen überwacht werden.

## Patentansprüche

1. Verfahren zum Überwachen einer rotierenden Maschine, die mit einer Mehrzahl von Sensoren zum Erfassen von physikalischen Parametern versehen ist und in mehreren variablen Betriebszuständen betrieben wird, wobei es sich bei der Maschine um eine Windenergieanlage handelt und wobei:
Start-Sensordaten in mindestens einem Basis-Betriebszustand (A, B, C) der Maschine gewonnen werden;
auf der Basis der Start-Sensordaten wissensbasiert ein Startmodell für die Maschine mit einem Regelsatz für die Durchführung der Überwachung aufgestellt wird, der bestimmt, welche Parameter in welcher Weise und mit welcher Gewichtung überwacht-werden sollen und welche Sensordaten dafür gewonnen und verwendet werden sollen;
eine Referenz-SOM mit anhand des Regelsatzes ausgewählten Sensordaten, die in einer Referenz-Betriebsphase der Maschine gewonnen werden, anhand des Regelsatzes erstellt wird, wobei mit SOM eine Self-Organizing-Map bezeichnet wird;
während einer Überwachungs-Betriebsphase der zeitliche Verlauf des Quantisierungsfehler der anhand des Regelsatzes ausgewählten Sensordaten bezüglich der Referenz-SOM verfolgt wird;
eine Fehlersuche gestartet wird, falls der Quantisierungsfehler ein durch den Regelsatz vorgegebenes Kriterium erfüllt,
anhand des Regelsatzes mindestens eine erste Diagnose-SOM mit einer Teilmenge der in der Überwachungs-Betriebsphase gewonnenen Sensordaten hinsichtlich Messzeitpunkten und/oder Zahl der Sensoren und optional mit in der Referenz-Betriebsphase gewonnenen Sensordaten erstellt wird,
mindestens ein 3D-Schaubild der ersten Diagnose-SOM(s) erstellt und mit Hilfe des Regelsatzes ausgewertet wird, um eine Fehlerursache zu identifizieren;
falls die Identifizierung einer Fehlerursache aus der Auswertung der ersten Diagnose-SOM(s) nicht möglich ist, mindestens eine zweite Diagnose-SOM mit einer anderen Teilmenge der in der Überwachungs-Betriebsphase gewonnenen Sensordaten hinsichtlich Messzeitpunkten und/oder Zahl der Sensoren und optional mit in der Referenz-Betriebsphase gewonnenen Sensordaten erstellt und ausgewertet wird, um eine Fehlerursache zu identifizieren;
das Startmodell - und damit der Regelsatz - anhand von Auswertungen der Referenz-SOMs und/oder der Diagnose-SOMs überprüft und modifiziert wird, sofern einerseits zusätzliche Sensordaten und andererseits zusätzliche Erkenntnisse über das Betriebsverhalten der Maschine gewonnen werden.

2. Verfahren gemäß Anspruch 1, **dadurch gekennzeichnet, dass** für die Auswertung der Diagnose-SOM(s) eine der jeweiligen Diagnose-SOM entsprechende Gutzustands-SOM mit während der Referenz-Betriebsphase der Maschine gewonnenen Sensordaten aufgestellt wird und ein 3D-Schaubild der Gutzustands-SOM zwecks Vergleich mit dem 3D-Schaubild der Diagnose-SOM(s) anhand des Regelsatzes erstellt wird.

3. Verfahren gemäß Anspruch 2, **dadurch gekennzeichnet, dass** der Vergleich der Diagnose-SOM(s) mit der Gutzustands-SOM unter Verwendung eines Bildverarbeitungs-Algorithmus erfolgt.

4. Verfahren gemäß Anspruch 2 oder 3, **dadurch gekennzeichnet, dass** für die Auswertung der Diagnose-SOMs eine 3D-Darstellung der Differenz der Diagnose-SOM und einer entsprechenden Gutzustands-SOM erfolgt.

5. Verfahren gemäß einem der vorhergehenden Ansprüche, **dadurch gekennzeichnet, dass** für die Auswertung der Diagnose-SOM(s) für die jeweilige Diagnose-SOM ein eigenes 3D-Schaubild für mindestens zwei der in der jeweiligen Diagnose-SOM enthaltenen Parametern erstellt wird, wobei diese Parameter anhand des Regelsatzes ausgewählt werden.

6. Verfahren gemäß einem der vorhergehenden Ansprüche, **dadurch gekennzeichnet, dass** bei der Auswahl der Diagnose-SOM(s) deren Quantisierungsfehler berücksichtigt wird.

7. Verfahren gemäß Anspruch 6, **dadurch gekennzeichnet, dass** solche SOM(s) als Diagnose-SOM(s) ausgewählt werden, deren Quantisierungsfehler über einem bestimmten Schwellwert liegt.

8. Verfahren gemäß einem der vorhergehenden Ansprüche, **dadurch gekennzeichnet, dass** mindestens ein Teil der Sensor-Daten anhand des Regelsatzes in mindestens zwei Frequenzbänder unterteilt wird.

9. Verfahren gemäß Anspruch 8, **dadurch gekennzeichnet, dass** sich die Diagnose-SOMs hinsichtlich der anhand des Regelsatzes gewählten Frequenzbänder der Daten mindestens eines der Sensoren unterscheiden.

10. Verfahren gemäß Anspruch 9, **dadurch gekennzeichnet, dass** in mindestens eine Diagnose-SOM Trajektorien für mindestens einen Parameter der Diagnose-SOM verfolgt bzw. analysiert werden.

11. Verfahren gemäß einem der vorhergehenden Ansprüche, **dadurch gekennzeichnet, dass** mindestens ein Teil der Sensordaten in einem zeitlichen Raster gemittelt wird und mit den zeitlich gemittelten Werten eine Diagnose-SOM erstellt wird.

12. Verfahren gemäß Anspruch 11, **dadurch gekennzeichnet, dass** mindestens ein Teil der Sensordaten in mehreren unterschiedlichen zeitlichen Rastern gemittelt wird und für jedes Raster eine separate Diagnose-SOM erstellt wird.

13. Verfahren gemäß einem der Ansprüche 11 und 12, **dadurch gekennzeichnet, dass** mindestens die auf der Basis der zeitlich gemittelten Sensordaten erstellte(n) Diagnose-SOM(s) mit einer auf der Basis der entsprechenden nicht gemittelten Sensordaten erstellten Diagnose-SOM verglichen wird bzw. werden.

14. Verfahren gemäß einem der vorhergehenden Ansprüche, **dadurch gekennzeichnet, dass** das wissensbasierte Aufstellen des Startmodells unter Verwendung eines FMEA-Verfahrens, unter Verwendung von Markov-Graphen, unter Verwendung von Petri-Netzen und/oder Verwendung einer Ausfallart-Analyse mittels eines Fehlerbaumanalyse (FTA)-Verfahrens erfolgt.

15. Verfahren gemäß einem der vorhergehenden Ansprüche, **dadurch gekennzeichnet, dass** das wissensbasierte Aufstellen des Startmodells unter Verwendung eines FMEA-Verfahrens erfolgt und bei der Aufstellung des Startmodells mindestens eine der folgenden Größen verwendet wird:
(1) eine Diagnoseprioritätszahl, die sich als Produkt der folgenden Indexgrößen ergibt: Schwere der Auswirkung des Auftretens eines bestimmten Fehlers hinsichtlich der Funktionsfähigkeit der Maschine; zu erwartende maschinenspezifische Folgekosten bei Eintritt des Fehlers; und Möglichkeit der Korrektur des Fehlers;
(2) eine Schwingprioritätszahl, die sich aus dem Produkt der folgenden Indexgrößen ergibt: Häufigkeit, mit der ein vorbestimmter Schwinggrenzwert überschritten wird; Schwere der Auswirkung der Überschreitung des Schwinggrenzwerts hinsichtlich der Funktionsfähigkeit der Maschine; und Entdeckungswahrscheinlichkeit der Überschreitung des Schwinggrenzwerts mittels des vorgesehenen Schwingungserfassungssystems;
(3) eine Risikoprioritätszahl, die sich aus dem Produkt der folgenden Indexgrößen ergibt: Häufigkeit, mit der der vorbestimmte Fehler im Betrieb der Maschine auftritt; Schwere der Auswirkung des Auftretens des Fehlers hinsichtlich der Funktionsfähigkeit der Maschine; und Entdeckungswahrscheinlichkeit des Auftretens des Fehlers mittels des verwendeten Diagnoseschemas und Diagnosesystems;

16. Verfahren gemäß Anspruch 15, **dadurch gekennzeichnet, dass** die Maschine in mehrere Komponenten unterteilt wird und für jede der Komponenten mindestens eine Diagnoseprioritätszahl, mindestens eine Schwingprioritätszahl und/oder mindestens eine Risikoprioritätszahl ermittelt wird.

17. Verfahren gemäß einem der vorhergehenden Ansprüche, **dadurch gekennzeichnet, dass** die Referenz-SOM mit mindestens einem Teil der während Überwachungs-Betriebsphase gewonnenen Sensordaten modifiziert wird, um die Referenz-SOM an Änderungen des Zustands der Maschine anzupassen.

18. Verfahren gemäß einem der vorhergehenden Ansprüche, **dadurch gekennzeichnet, dass** alle SOMs manuell/deterministisch so initialisiert werden, dass sich gleiche Betriebszustände bei allen SOMs in gleichen Gebieten der SOMs anordnen.

19. Verfahren gemäß einem der vorhergehenden Ansprüche, **dadurch gekennzeichnet, dass** die Nachbarschaftsfunktion der SOMs als Gauß-Funktion gewählt wird.

20. Verfahren gemäß einem der vorhergehenden Ansprüche, **dadurch gekennzeichnet, dass** Sensor-Messdaten gfs. zwecks Vergleichbarkeit mit anderen Sensor-Messdaten interpoliert werden, um ein gleiches Zeitraster für alle Sensor-Messdaten zu erzielen.

21. Verfahren gemäß einem der vorhergehenden Ansprüche, **dadurch gekennzeichnet, dass** Messwerte, die einen bestimmten Grenzwert, bezogen auf einen Mittelwert mehrerer Messwerte, übersteigen, nicht in den SOMs berücksichtigt werden.

22. Verfahren gemäß einem der vorhergehenden Ansprüche, **dadurch gekennzeichnet, dass** lediglich in den SOMs enthaltene Daten mittels Datenfernübertragung an ein entfernt von der Maschine gelegenes Servicezentrum übertragen wird, um eine Reduktion der übertragenden Daten im Vergleich zu den gewonnenen Sensordaten zu erzielen.

23. Verfahren gemäß einem der vorhergehenden Ansprüche, **dadurch gekennzeichnet, dass** ein Alarmsignal an das Servicezentrum gesendet wird, wenn der Quantisierungsfehler der Referenz-SOM ein durch den Regelsatz vorgegebenes Kriterium erfüllt.

24. Verfahren gemäß einem der vorhergehenden Ansprüche, **dadurch gekennzeichnet, dass** die erfassten Parameter die Windgeschwindigkeit, die Drehzahl und Leistung der WEA, sowie an unterschiedlichen Stellen der WEA gemessene Schwingkennwerte beinhalten.

25. Verfahren gemäß Anspruch 24, **dadurch gekennzeichnet, dass** für die Diagnose-SOM(s) bestimmte Schwingkennwerte bestimmter Komponenten der Maschine anhand des Regelsatzes ausgewählt werden.

26. Verfahren zum Überwachen einer Mehrzahl von rotierenden Maschinen, die jeweils mit einer Mehrzahl von Sensoren zum Erfassen von physikalischen Parametern versehen sind und in mehreren variablen Betriebszuständen betrieben werden, wobei es sich bei den Maschinen um Windenergieanlagen handelt und wobei
die einzelnen Maschinen durch Zuweisung einer Anlagen-Kennzahl betreffend die Art der Komponenten und/oder des Standorts der jeweiligen Maschine katalogisiert werden;
vor Beginn der Überwachung einer ausgewählten Maschine untersucht wird, ob sich in der Mehrzahl der Maschinen eine andere Maschine mit derselben Anlagen-Kennzahl wie die ausgewählte Maschine oder mit einer um nicht mehr als einen vorgegebenen Wert von der Anlagen-Kennzahl der ausgewählten Maschine abweichenden Anlagen-Kennzahl findet, und, falls dies der Fall ist, von der anderen Maschine ein StartModell mit einem Regelsatz für die Durchführung der Überwachung übernommen wird, der bestimmt, welche Parameter in welcher Weise und mit welcher Gewichtung überwacht werden sollen und welche Sensordaten dafür gewonnen und verwendet werden sollen, wobei das StartModell auf der Basis von Start-Sensordaten, die in mindestens einem quasistationären Basis-Betriebszustand der anderen Maschine gewonnen wurden, wissensbasiert aufgestellt wurde, und
(a) eine Referenz-SOM mit anhand des Regelsatzes ausgewählten Sensordaten, die in einer Referenz-Betriebsphase der ausgewählten Maschine gewonnen werden, anhand des Regelsatzes erstellt wird, wobei mit SOM eine Self-Organizing-Map bezeichnet wird; oder
(b) eine Referenz-SOM der anderen Maschine übernommen wird, die mit anhand des Regelsatzes der anderen Maschine ausgewählten Sensordaten, die in einer Referenz-Betriebsphase der anderen Maschine gewonnen werden, anhand des Regelsatzes aufgestellt wurde;
während einer Überwachungs-Betriebsphase der zeitliche Verlauf des Quantisierungsfehler von anhand des Regelsatzes ausgewählten Sensordaten der ausgewählten Maschine bezüglich der Referenz-SOM verfolgt wird;
eine Fehlersuche gestartet wird, falls der Quantisierungsfehler ein durch den Regelsatz vorgegebenes Kriterium erfüllt, bei welcher
anhand des Regelsatzes mindestens eine erste Diagnose-SOM mit einer Teilmenge der in der Überwachungs-Betriebsphase gewonnenen Sensordaten hinsichtlich Messzeitpunkten und/oder Zahl der Sensoren und optional mit in der Referenz-Betriebsphase gewonnenen Sensordaten erstellt wird,
mindestens ein 3D-Schaubild der ersten Diagnose-SOM(s) erstellt und ausgewertet wird, um eine Fehlerursache zu identifizieren;
falls keine eindeutige Fehlerursache aus der Auswertung der ersten Diagnose-SOM(s) gelingt, mindestens eine zweite Diagnose-SOM mit einer anderen Teilmenge der in der Überwachungs-Betriebsphase gewonnenen Sensordaten hinsichtlich Messzeitpunkten und/oder Zahl der Sensoren und optional mit in der Referenz-Betriebsphase gewonnenen Sensordaten erstellt und ausgewertet wird, um eine Fehlerursache zu identifizieren;
das Startmodell - und damit der Regelsatz - anhand von Auswertungen der Referenz-SOMs und/oder der Diagnose-SOMs überprüft und modifiziert wird, sofern einerseits zusätzliche Sensordaten und andererseits zusätzliche Erkenntnisse über das Betriebsverhalten der Maschine gewonnen werden;
für andere Maschinen mit derselben Anlagen-Kennzahl wie die ausgewählte Maschine oder mit einer um nicht mehr als einen vorgegebenen Wert von der Anlagen-Kennzahl der ausgewählten Maschine abweichenden Anlagen-Kennzahl das - gfs. modifizierte - Startmodell und/oder eine um in der Überwachungs-Betriebsphase gewonnene Sensordaten ergänzte Referenz-SOM als Referenz-SOM zur Verfügung gestellt wird.

27. Verfahren gemäß Anspruch 26, **dadurch gekennzeichnet, dass** die Anlagen-Kennzahl mindestens eine der folgenden Größen spezifiziert: Getriebetyp, Umrichtertyp, Rotorblatttyp, Generatortyp, und Turmtyp.

28. Verfahren gemäß Anspruch 26 oder 27, **dadurch gekennzeichnet, dass** die Anlagen-Kennzahl den Standort hinsichtlich Beziehung zu benachbarten WEAs, Topographie der Umgebung, und Bewuchs und Bebauung der Umgebung kennzeichnet.

29. Verfahren gemäß einem der vorhergehenden Ansprüche, **dadurch gekennzeichnet, dass** die Auswertung der ersten Diagnose-SOM(s) und/oder der zweiten Diagnose-SOM(s) automatisch mittels mindestens eines Bildverarbeitungsalgorithmus erfolgt.

## Claims

1. Method for monitoring a rotating machine which is provided with a plurality of sensors for capturing physical parameters and is operated in a plurality of variable operating states, wherein the machine is a wind energy installation, and wherein:
starting sensor data are obtained in at least one basic operating state (A, B, C) of the machine;
a starting model for the machine is established in a knowledge-based manner on the basis of the starting sensor data using a set of rules for carrying out the monitoring process, which set of rules determines which parameters are intended to be monitored in which manner and with which weighting and which sensor data are intended to be obtained and used for this purpose;
a reference SOM is created on the basis of the set of rules using sensor data which are selected on the basis of the set of rules and are obtained in a reference operating phase of the machine, wherein SOM is used to denote a self-organizing map;
the temporal profile of the quantization error of the sensor data selected on the basis of the set of rules is tracked with respect to the reference SOM during a monitoring operating phase;
troubleshooting is started if the quantization error satisfies a criterion predefined by the set of rules,
at least one first diagnostic SOM is created on the basis of the set of rules using a subset of the sensor data obtained in the monitoring operating phase with regard to measuring times and/or the number of sensors and optionally using sensor data obtained in the reference operating phase,
at least one 3-D diagram of the first diagnostic SOM(s) is created and is evaluated with the aid of the set of rules in order to identify the cause of a fault;
if it is not possible to identify the cause of a fault from the evaluation of the first diagnostic SOM(s), at least one second diagnostic SOM is created using another subset of the sensor data obtained in the monitoring operating phase with regard to measuring times and/or the number of sensors and optionally using sensor data obtained in the reference operating phase and is evaluated in order to identify the cause of a fault;
the starting model - and therefore the set of rules - is checked and modified on the basis of evaluations of the reference SOMs and/or the diagnostic SOMs provided that additional sensor data, on the one hand, and additional knowledge of the operating behaviour of the machine, on the other hand, are obtained.

2. Method according to Claim 1, **characterized in that**, for the purpose of evaluating the diagnostic SOM(s), a good state SOM corresponding to the respective diagnostic SOM is established using sensor data obtained during the reference operating phase of the machine, and a 3-D diagram of the good state SOM is created on the basis of the set of rules for the purpose of comparison with the 3-D diagram of the diagnostic SOM(s).

3. Method according to Claim 2, **characterized in that** the diagnostic SOM(s) is/are compared with the good state SOM using an image processing algorithm.

4. Method according to Claim 2 or 3, **characterized in that**, for the purpose of evaluating the diagnostic SOMs, a 3-D representation of the difference between the diagnostic SOM and a corresponding good state SOM is effected.

5. Method according to one of the preceding claims, **characterized in that**, for the purpose of evaluating the diagnostic SOM(s), a separate 3-D diagram for at least two of the parameters contained in the respective diagnostic SOM is created for the respective diagnostic SOM, wherein these parameters are selected on the basis of the set of rules.

6. Method according to one of the preceding claims, **characterized in that**, when selecting the diagnostic SOM(s), its/their quantization error is taken into account.

7. Method according to Claim 6, **characterized in that** that/those SOM(s) whose quantization error is above a particular threshold value is/are selected as diagnostic SOM(s).

8. Method according to one of the preceding claims, **characterized in that** at least some of the sensor data are subdivided into at least two frequency bands on the basis of the set of rules.

9. Method according to Claim 8, **characterized in that** the diagnostic SOMs differ in terms of the frequency bands of the data from at least one of the sensors, which frequency bands are selected on the basis of the set of rules.

10. Method according to Claim 9, **characterized in that**, in at least one diagnostic SOM, trajectories for at least one parameter of the diagnostic SOM are tracked or analysed.

11. Method according to one of the preceding claims, **characterized in that** at least some of the sensor data are averaged in a temporal grid and a diagnostic SOM is created using the temporally averaged values.

12. Method according to Claim 11, **characterized in that** at least some of the sensor data are averaged in a plurality of different temporal grids and a separate diagnostic SOM is created for each grid.

13. Method according to either of Claims 11 and 12, **characterized in that** at least the diagnostic SOM(s) created on the basis of the temporally averaged sensor data is/are compared with a diagnostic SOM created on the basis of the corresponding sensor data which have not been averaged.

14. Method according to one of the preceding claims, **characterized in that** the knowledge-based establishment of the starting model is carried out using an FMEA method, using Markov graphs, using Petri nets and/or using a failure type analysis by means of a fault tree analysis (FTA) method.

15. Method according to one of the preceding claims, **characterized in that** the knowledge-based establishment of the starting model is carried out using an FMEA method and at least one of the following variables is used when establishing the starting model:
(1) a diagnosis priority number which is produced as the product of the following index variables: severity of the effect of the occurrence of a particular fault with respect to the functionality of the machine; expected machine-specific follow-up costs if the fault occurs; and possibility of correcting the fault;
(2) a vibration priority number which is produced from the product of the following index variables: frequency with which a predetermined vibration limit value is exceeded; severity of the effect of the vibration limit value being exceeded with respect to the functionality of the machine; and probability of discovering when the vibration limit value is exceeded by means of the provided vibration capture system;
(3) a risk priority number which is produced from the product of the following index variables: frequency with which the predetermined fault occurs during operation of the machine; severity of the effect of the occurrence of the fault with respect to the functionality of the machine; and probability of discovering the occurrence of the fault by means of the diagnostic scheme and diagnostic system used.

16. Method according to Claim 15, **characterized in that** the machine is subdivided into a plurality of components and at least one diagnosis priority number, at least one vibration priority number and/or at least one risk priority number is/are determined for each of the components.

17. Method according to one of the preceding claims, **characterized in that** the reference SOM is modified using at least some of the sensor data obtained during the monitoring operating phase in order to adapt the reference SOM to changes in the state of the machine.

18. Method according to one of the preceding claims, **characterized in that** all SOMs are initialized manually/deterministically in such a manner that the same operating states are positioned in the same areas of the SOMs in all SOMs.

19. Method according to one of the preceding claims, **characterized in that** the neighbourhood function of the SOMs is selected as a Gaussian function.

20. Method according to one of the preceding claims, **characterized in that** sensor measurement data are interpolated, possibly for the purpose of comparability with other sensor measurement data, in order to achieve the same time grid for all sensor measurement data.

21. Method according to one of the preceding claims, **characterized in that** measured values which exceed a particular limit value, based on an average value of a plurality of measured values, are not taken into account in the SOMs.

22. Method according to one of the preceding claims, **characterized in that** only data contained in the SOMs are transmitted to a service centre remote from the machine by means of remote data transmission in order to reduce the transmitted data in comparison with the sensor data obtained.

23. Method according to one of the preceding claims, **characterized in that** an alarm signal is transmitted to the service centre if the quantization error of the reference SOM satisfies a criterion predefined by the set of rules.

24. Method according to one of the preceding claims, **characterized in that** the captured parameters contain the wind speed, the rotational speed and power of the wind energy installation as well as vibration characteristic values measured at different locations of the wind energy installation.

25. Method according to Claim 24, **characterized in that** particular vibration characteristic values of particular components of the machine are selected for the diagnostic SOM(s) on the basis of the set of rules.

26. Method for monitoring a plurality of rotating machines which are each provided with a plurality of sensors for capturing physical parameters and are operated in a plurality of variable operating states, wherein the machines are wind energy installations, and wherein
the individual machines are catalogued by allocating an installation code relating to the type of components and/or the location of the respective machine;
before the monitoring of a selected machine is started, it is investigated whether another machine having the same installation code as the selected machine or having an installation code which does not differ from the installation code of the selected machine by more than a predefined value is among the plurality of machines, and, if this is the case, a starting model with a set of rules for carrying out the monitoring process is adopted from the other machine, which set of rules determines which parameters are intended to be monitored in which manner and with which weighting and which sensor data are intended to be obtained and used for this purpose, wherein the starting model was established in a knowledge-based manner on the basis of starting sensor data which were obtained in at least one quasi-steady basic operating state of the other machine, and
(a) a reference SOM is created on the basis of the set of rules using sensor data which are selected on the basis of the set of rules and are obtained in a reference operating phase of the selected machine, wherein SOM is used to denote a self-organizing map;
or
(b) a reference SOM from the other machine is adopted, which reference SOM was established on the basis of the set of rules using sensor data which are selected on the basis of the set of rules of the other machine and are obtained in a reference operating phase of the other machine;
the temporal profile of the quantization error of sensor data relating to the selected machine which are selected on the basis of the set of rules is tracked with respect to the reference SOM during a monitoring operating phase;
troubleshooting is started if the quantization error satisfies a criterion predefined by the set of rules, during which
at least one first diagnostic SOM is created on the basis of the set of rules using a subset of the sensor data obtained in the monitoring operating phase with respect to measuring times and/or the number of sensors and optionally using sensor data obtained in the reference operating phase,
at least one 3-D diagram of the first diagnostic SOM(s) is created and evaluated in order to identify the cause of a fault;
if no clear cause of a fault emerges from the evaluation of the first diagnostic SOM(s), at least one second diagnostic SOM is created using another subset of the sensor data obtained in the monitoring operating phase with respect to measuring times and/or the number of sensors and optionally using sensor data obtained in the reference operating phase and is evaluated in order to identify the cause of a fault;
the starting model - and therefore the set of rules - is checked and modified on the basis of evaluations of the reference SOMs and/or the diagnostic SOMs provided that additional sensor data, on the one hand, and additional knowledge of the operating behaviour of the machine, on the other hand, are obtained;
for other machines having the same installation code as the selected machine or having an installation code which does not differ from the installation code of the selected machine by more than a predefined value, the - possibly modified - starting model and/or a reference SOM supplemented with sensor data obtained in the monitoring operating phase is/are provided as the reference SOM.

27. Method according to Claim 26, **characterized in that** the installation code specifies at least one of the following variables: transmission type, converter type, rotor blade type, generator type and tower type.

28. Method according to Claim 26 or 27, **characterized in that** the installation code indicates the location in terms of the relationship with respect to adjacent wind energy installations, the topography of the environment, and the vegetation and development in the environment.

29. Method according to one of the preceding claims, **characterized in that** the first diagnostic SOM(s) and/or the second diagnostic SOM(s) is/are evaluated automatically by means of at least one image processing algorithm.

## Revendications

1. Procédé de surveillance d'une machine rotative, qui est munie d'une multiplicité de capteurs pour détecter des paramètres physiques et qui fonctionne dans plusieurs états de fonctionnement variables, dans lequel la machine est une éolienne et dans lequel:
on recueille des données de capteur de démarrage dans au moins un état de fonctionnement de base (A, B, C) de la machine;
en se fondant sur les connaissances, on établit sur la base des données de capteur de démarrage un modèle de démarrage pour la machine avec un ensemble de règles pour l'exécution de la surveillance, qui détermine quels paramètres doivent être surveillés, de quelle manière et avec quelle pondération, et quelles données de capteur doivent à cet effet être recueillies et utilisées;
on établit à l'aide de l'ensemble de règles une SOM de référence avec des données de capteur sélectionnées à l'aide de l'ensemble de règles, que l'on recueille dans une phase de fonctionnement de référence de la machine, dans lequel on désigne par SOM une Self-Organizing-Map [carte auto-adaptative];
pendant une phase de fonctionnement de surveillance, on suit l'évolution temporelle de l'erreur de quantification des données de capteur sélectionnées à l'aide de l'ensemble de règles par rapport à la SOM de référence;
on entame une recherche d'erreur, dans le cas où l'erreur de quantification remplit un critère prédéterminé par l'ensemble de règles,
à l'aide de l'ensemble de règles, on dresse au moins une première SOM de diagnostic avec une quantité partielle des données de capteur recueillies dans la phase de fonctionnement de surveillance en ce qui concerne les instants de mesure et/ou le nombre des capteurs et en option avec des données de capteur recueillies dans la phase de fonctionnement de référence,
on établit au moins un graphique 3D de la/des première(s) SOM de diagnostic et on l'évalue à l'aide de l'ensemble de règles, afin d'identifier une cause d'erreur;
dans le cas où l'identification d'une cause d'erreur à partir de l'évaluation de la/des première(s) SOM de diagnostic n'est pas possible, on dresse au moins une deuxième SOM de diagnostic avec une autre quantité partielle des données de capteur recueillies dans la phase de fonctionnement de surveillance en ce qui concerne les instants de mesure et/ou le nombre des capteurs et en option avec des données de capteur recueillies dans la phase de fonctionnement de référence et on l'évalue, afin d'identifier une cause d'erreur;
on vérifie le modèle de démarrage - et dès lors l'ensemble de règles - à l'aide d'évaluations des SOM de référence et/ou des SOM de diagnostic et on le modifie, dans la mesure où l'on recueille d'une part des données de capteur supplémentaires et d'autre part des connaissances supplémentaires sur le comportement de fonctionnement de la machine.

2. Procédé selon la revendication 1, **caractérisé en ce que** pour l'évaluation de la/des SOM de diagnostic, on dresse une SOM d'état normal correspondant à la SOM de diagnostic respective avec des données de capteur recueillies pendant la phase de fonctionnement de référence de la machine et on établit à l'aide de l'ensemble de règles un graphique 3D de la SOM d'état normal, en vue de la comparaison avec le graphique 3D de la/des SOM de diagnostic.

3. Procédé selon la revendication 2, **caractérisé en ce que** la comparaison de la/des SOM de diagnostic avec la SOM d'état normal est effectuée en utilisant un algorithme de traitement d'image.

4. Procédé selon une revendication 2 ou 3, **caractérisé en ce que** pour l'évaluation des SOM de diagnostic on effectue une représentation 3D de la différence entre la SOM de diagnostic et une SOM d'état normal correspondante.

5. Procédé selon l'une quelconque des revendications précédentes, **caractérisé en ce que** pour l'évaluation de la/des SOM de diagnostic on établit pour la SOM de diagnostic respective un graphique 3D particulier pour au moins deux des paramètres contenus dans la SOM de diagnostic respective, dans lequel ces paramètres sont sélectionnés à l'aide de l'ensemble de règles.

6. Procédé selon l'une quelconque des revendications précédentes, **caractérisé en ce que** lors de la sélection de la/des SOM de diagnostic, on tient compte de leur erreur de quantification.

7. Procédé selon la revendication 6, **caractérisé en ce que** l'on sélectionne comme SOM de diagnostic la/les SOM de diagnostic dont l'erreur de quantification se situe au-delà d'une valeur de seuil déterminée.

8. Procédé selon l'une quelconque des revendications précédentes, **caractérisé en ce que** l'on divise au moins une partie des données de capteur en au moins deux bandes de fréquence à l'aide de l'ensemble de règles.

9. Procédé selon la revendication 8, **caractérisé en ce que** les SOM de diagnostic diffèrent en ce qui concerne les bandes de fréquence des données d'au moins un des capteurs, choisies à l'aide de l'ensemble de règles.

10. Procédé selon la revendication 9, **caractérisé en ce que** l'on suit ou on analyse dans au moins une SOM de diagnostic des trajectoires pour au moins un paramètre de la SOM de diagnostic.

11. Procédé selon l'une quelconque des revendications précédentes, **caractérisé en ce que** l'on forme la moyenne pour au moins une partie des données de capteur dans une grille temporelle et on établit une SOM de diagnostic avec les valeurs moyennes temporelles.

12. Procédé selon la revendication 11, **caractérisé en ce que** l'on forme la moyenne pour au moins une partie des données de capteur dans plusieurs grilles temporelles différentes et on établit une SOM de diagnostic séparée pour chaque grille.

13. Procédé selon une des revendications 11 et 12, **caractérisé en ce que** l'on compare au moins la/les SOM de diagnostic établie (s) sur la base des données de capteur moyennes temporelles avec une SOM de diagnostic établie sur la base des données de capteurs correspondantes non moyennes.

14. Procédé selon l'une quelconque des revendications précédentes, **caractérisé en ce que** l'on effectue en se fondant sur les connaissances l'établissement du modèle de démarrage avec utilisation d'un procédé AMDE, avec utilisation de graphes de Markov, avec utilisation de réseaux de Petri et/ou avec utilisation d'une analyse de type de défaillance au moyen d'une analyse de l'arbre de défaillances (procédé FTA).

15. Procédé selon l'une quelconque des revendications précédentes, **caractérisé en ce que** l'on effectue en se fondant sur les connaissances l'établissement du modèle de démarrage avec utilisation d'un procédé AMDE et on utilise lors de l'établissement du modèle de démarrage au moins une des grandeurs suivantes:
(1) un coefficient de priorité de diagnostic, qui résulte du produit des valeurs d'indice suivantes: gravité de l'effet de la survenance d'un défaut déterminé du point de vue de l'aptitude fonctionnelle de la machine; coûts résultants spécifiques à la machine à envisager lors de l'apparition du défaut; et possibilité de correction du défaut;
(2) un coefficient de priorité d'oscillation, qui résulte du produit des valeurs d'indice suivantes: fréquence, avec laquelle une valeur limite d'oscillation prédéterminée est franchie vers le haut; gravité de l'effet du franchissement vers le haut de la valeur limite d'oscillation du point de vue de l'aptitude fonctionnelle de la machine; et probabilité de découverte du franchissement vers le haut de la valeur limite d'oscillation au moyen du système de détection d'oscillations prévu;
(3) un coefficient de priorité de risque, qui résulte du produit des valeurs d'indice suivantes: fréquence, avec laquelle le défaut prédéterminé se produit dans le fonctionnement de la machine; gravité de l'effet de la survenance du défaut du point de vue de l'aptitude fonctionnelle de la machine; et probabilité de découverte de la survenance du défaut au moyen du schéma de diagnostic et du système de diagnostic utilisés.

16. Procédé selon la revendication 15, **caractérisé en ce que** la machine est divisée en plusieurs composants et on détermine pour chacun des composants au moins un coefficient de priorité de diagnostic, au moins un coefficient de priorité d'oscillation et/ou au moins un coefficient de priorité de risque.

17. Procédé selon l'une quelconque des revendications précédentes, **caractérisé en ce que** l'on modifie la SOM de référence avec au moins une partie des données de capteur recueillies pendant la phase de fonctionnement de surveillance, afin d'adapter la SOM de référence à des changements de l'état de la machine.

18. Procédé selon l'une quelconque des revendications précédentes, **caractérisé en ce que** l'on initialise toutes les SOM de façon manuelle/déterministe, de telle manière que des états de fonctionnement identiques se disposent pour toutes les SOM dans des régions identiques des SOM.

19. Procédé selon l'une quelconque des revendications précédentes, **caractérisé en ce que** l'on choisit la fonction de voisinage des SOM comme fonction de Gauss.

20. Procédé selon l'une quelconque des revendications précédentes, **caractérisé en ce que** l'on interpole des données de mesure de capteur éventuellement dans un but de possibilité de comparaison avec d'autres données de mesure de capteur, afin de produire une grille temporelle identique pour toutes les données de mesure de capteur.

21. Procédé selon l'une quelconque des revendications précédentes, **caractérisé en ce que** l'on ne tient pas compte dans les SOM de valeurs de mesure, qui dépassent une valeur limite déterminée, rapportée à une valeur moyenne de plusieurs valeurs de mesure.

22. Procédé selon l'une quelconque des revendications précédentes, **caractérisé en ce que** l'on ne transmet que des données contenues dans les SOM au moyen d'une télétransmission de données à un centre de service situé loin de la machine, afin produire une réduction des données transmises par comparaison avec les données de capteur recueillies.

23. Procédé selon l'une quelconque des revendications précédentes, **caractérisé en ce que** l'on envoie un signal d'alarme au centre de service, lorsque l'erreur de quantification de la SOM de référence remplit un critère prédéterminé par l'ensemble de règles.

24. Procédé selon l'une quelconque des revendications précédentes, **caractérisé en ce que** les paramètres détectés contiennent la vitesse du vent, le nombre de tours et la puissance de l'éolienne, ainsi que des valeurs caractéristiques d'oscillation mesurées en différents points de l'éolienne.

25. Procédé selon la revendication 24, **caractérisé en ce que** l'on sélectionne pour la/les SOM de diagnostic des valeurs caractéristiques d'oscillation déterminées de composants déterminés de la machine à l'aide de l'ensemble de règles.

26. Procédé pour surveiller une multiplicité de machines rotatives, qui sont chacune munies d'une multiplicité de capteurs pour détecter des paramètres physiques et qui fonctionnent dans plusieurs états de fonctionnement variables, dans lequel les machines sont des éoliennes et dans lequel
les machines individuelles sont cataloguées par attribution d'un numéro caractéristique d'installation concernant la nature des composants et/ou l'emplacement de la machine respective;
avant de commencer la surveillance d'une machine sélectionnée, on recherche s'il se trouve parmi la multiplicité des machines une autre machine avec le même numéro caractéristique d'installation que la machine sélectionnée ou avec un numéro caractéristique d'installation ne s'écartant pas de plus d'une valeur prédéterminée du numéro caractéristique d'installation de la machine sélectionnée et, si c'est le cas, on reprend de l'autre machine un modèle de démarrage avec un ensemble de règles pour effectuer la surveillance, qui détermine quels paramètres doivent être surveillés, de quelle manière et avec quelle pondération, et quelles données de capteur doivent à cet effet être recueillies et utilisées, dans lequel le modèle de démarrage a été établi en se fondant sur les connaissances sur la base de données de capteur de démarrage, qui ont été recueillies dans au moins un état de fonctionnement de base quasi-stationnaire de l'autre machine, et
(a) on établit à l'aide de l'ensemble de règles une SOM de référence avec des données de capteur sélectionnées à l'aide de l'ensemble de règles, qui ont été recueillies dans une phase de fonctionnement de référence de la machine sélectionnée, dans lequel on désigne par SOM une Self-Organizing-Map [carte auto-adaptative];
ou
(b) on reprend une SOM de référence de l'autre machine, qui avait été établie à l'aide de l'ensemble de règles avec des données de capteur sélectionnées à l'aide de l'ensemble de règles de l'autre machine, qui sont recueillies dans une phase de fonctionnement de référence de l'autre machine;
pendant une phase de fonctionnement de surveillance, on suit l'évolution temporelle de l'erreur de quantification des données de capteur de la machine sélectionnée, sélectionnées à l'aide de l'ensemble de règles, par rapport à la SOM de référence;
on entame une recherche d'erreur, dans le cas où l'erreur de quantification remplit un critère prédéterminé par l'ensemble de règles, dans laquelle
à l'aide de l'ensemble de règles, on dresse au moins une première SOM de diagnostic avec une quantité partielle des données de capteur recueillies dans la phase de fonctionnement de surveillance en ce qui concerne les instants de mesure et/ou le nombre des capteurs et en option avec des données de capteur recueillies dans la phase de fonctionnement de référence,
on établit au moins un graphique 3D de la/des première(s) SOM de diagnostic et on l'évalue, afin d'identifier une cause d'erreur;
dans le cas où aucune cause d'erreur claire ne ressort de l'évaluation de la/des première(s) SOM de diagnostic, on dresse au moins une deuxième SOM de diagnostic avec une autre quantité partielle des données de capteur recueillies dans la phase de fonctionnement de surveillance en ce qui concerne les instants de mesure et/ou le nombre des capteurs et en option avec des données de capteur recueillies dans la phase de fonctionnement de référence et on l'évalue, afin d'identifier une cause d'erreur;
on vérifie le modèle de démarrage - et dès lors l'ensemble de règles - à l'aide d'évaluations des SOM de référence et/ou des SOM de diagnostic et on le modifie, dans la mesure où l'on recueille d'une part des données de capteur supplémentaires et d'autre part des connaissances supplémentaires sur le comportement de fonctionnement de la machine;
on met à disposition comme SOM de référence, pour d'autres machines avec le même numéro caractéristique d'installation que la machine sélectionnée ou avec un numéro caractéristique d'installation ne s'écartant pas de plus d'une valeur prédéterminée du numéro caractéristique d'installation de la machine sélectionnée, le modèle de démarrage - éventuellement modifié - et/ou une SOM de référence complétée par des données de capteur recueillies dans la phase de fonctionnement de surveillance.

27. Procédé selon la revendication 26, **caractérisé en ce que** le numéro caractéristique d'installation spécifie au moins une des grandeurs suivantes: type de transmission, type de convertisseur, type de pale de rotor, type de générateur et type de tour.

28. Procédé selon une revendication 26 ou 27, **caractérisé en ce que** le numéro caractéristique d'installation identifie l'emplacement du point de vue de la relation avec d'autres éoliennes, la topographie de l'environnement, et la végétation et les constructions dans l'environnement.

29. Procédé selon l'une quelconque des revendications précédentes, **caractérisé en ce que** l'on effectue l'évaluation de la/des première(s) SOM de diagnostic et/ou de la/des deuxième(s) SOM de diagnostic automatiquement au moyen d'au moins un algorithme de traitement d'image.
